(19) Europäisches Patentamt / European Patent Office / Office européen des brevets

(11) **EP 4 572 421 A1**

(12) **EUROPEAN PATENT APPLICATION**
published in accordance with Art. 153(4) EPC

(43) Date of publication:
**18.06.2025 Bulletin 2025/25**

(21) Application number: **23852898.8**

(22) Date of filing: **04.08.2023**

(51) International Patent Classification (IPC):
**H04W 52/02** (2009.01)   **H04W 48/14** (2009.01)

(52) Cooperative Patent Classification (CPC):
**H04W 48/14; H04W 52/02**

(86) International application number:
**PCT/KR2023/011515**

(87) International publication number:
**WO 2024/035018 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.08.2022 US 202263396192 P**
**04.11.2022 KR 20220146414**

(71) Applicant: **LG Electronics Inc.**
**Yeongdeungpo-gu**
**Seoul 07336 (KR)**

(72) Inventors:
• **MYUNG, Sechang**
  **Seoul 06772 (KR)**
• **KIM, Seonwook**
  **Seoul 06772 (KR)**
• **LEE, Youngdae**
  **Seoul 06772 (KR)**
• **KIM, Kijun**
  **Seoul 06772 (KR)**
• **KIM, Jaehyung**
  **Seoul 06772 (KR)**
• **YANG, Suckchel**
  **Seoul 06772 (KR)**
• **HWANG, Seunggye**
  **Seoul 06772 (KR)**

(74) Representative: **Plasseraud IP**
**104 Rue de Richelieu**
**CS92104**
**75080 Paris Cedex 02 (FR)**

(54) **METHOD, USER EQUIPMENT, PROCESSING DEVICE, STORAGE MEDIUM, AND COMPUTER PROGRAM FOR RECEIVING DOWNLINK SIGNAL, AND METHOD AND BASE STATION FOR TRANSMITTING DOWNLINK SIGNAL**

(57) A UE comprising: detecting, in a cell, a synchronization signal block (SSB) comprising a primary synchronization signal (PSS), a secondary synchronization signal (SSS), and a physical broadcast channel (PBCH); acquiring, from the SSB, information related to whether system information block 1 (SIB1) is on-demand system information (SI); transmitting a SIB1 request on the basis that the SIB1 is the on-demand SI; on the basis of the SIB1 request, monitoring a physical downlink control channel (PDCCH) associated with the SIB 1; and, on the basis of detecting the PDCCH, receiving a physical downlink shared channel (PDSCH) for carrying the SIB1.

**FIG. 13**

Detect SSB including PSS, SSS, and PBCH on cell. — S1301

Obtain information on whether SIB1 is on-demand SI from SSB. — S1302

Transmit SIB1 request based on SIB1 being on-demand SI. — S1303

Monitor PDCCH related to SIB1 based on SIB1 request and receive PDSCH carrying SIB1 based on detection of PDCCH. — S1304

EP 4 572 421 A1

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

#### Technical Problem

One object of the present disclosure is to provide methods and/or procedures for a base station (BS) to transmit common signal(s)/channel(s).

Another object of the present disclosure is to provide methods and/or procedures for a BS to operate for network energy saving (NES) purposes by performing transmission/reception of a specific signal/channel based on detection of an uplink (UL) wake-up signal (WUS).

Another object of the present disclosure is to provide methods and/or procedures for secondary cell (SCell) activation of a user equipment (UE).

Another object of the present disclosure is to provide methods and/or procedures for compensating load-based cell activation.

A further object of the present disclosure is to provide methods and/or procedures for a UE to adjust the power of a UL WUS.

The objects to be achieved with the present disclosure are not limited to what has been particularly described hereinabove and other objects not described herein will be more clearly understood by persons skilled in the art from the following detailed description.

#### Technical Solution

In an aspect of the present disclosure, provided herein is a method of receiving a downlink signal by a user equipment (UE) in a wireless communication system. The method includes: detecting a synchronization signal block (SSB) on a cell, wherein the SSB includes a primary synchronization signal (PSS), a secondary synchronization signal (SSS), and a physical broadcast channel (PBCH); obtaining information regarding whether a system information block 1 (SIB1) is on-demand system information (SI) from the SSB; transmitting an SIB1 request based on the SIB1 being the on-demand SI; monitoring a physical downlink control channel (PDCCH) related to the SIB1 based on the SIB1 request; and receiving a physical downlink shared channel (PDSCH) carrying the SIB1 based on detection of the PDCCH.

In another aspect of the present disclosure, provided herein is a UE configured to receive a downlink signal in a wireless communication system. The UE includes: at least one transceiver; at least one processor; and at least one computer memory operably connected to the at least one processor and storing instructions that, when executed, cause the at least one processor to perform operations. The operations include: detecting an SSB on a cell, wherein the SSB includes a PSS, an SSS, and a PBCH; obtaining information regarding whether an SIB1 is on-demand SI from the SSB; transmitting an SIB1 request based on the SIB 1 being the on-demand SI; monitoring a PDCCH related to the SIB1 based on the SIB1 request; and receiving a PDSCH carrying the SIB1 based on detection of the PDCCH.

In another aspect of the present disclosure, provided herein is a processing device. The processing device includes: at least one processor; and at least one computer memory operably connected to the at least one processor and storing instructions that, when executed, cause the at least one processor to perform operations. The operations include: detecting an SSB on a cell, wherein the SSB includes a PSS, an SSS, and a PBCH; obtaining information regarding whether an SIB1 is on-demand SI from the SSB; transmitting an SIB1 request based on the SIB1 being the on-demand SI; monitoring a PDCCH related to the SIB1 based on the SIB1 request; and receiving a PDSCH carrying the SIB1 based on detection of the PDCCH.

In another aspect of the present disclosure, provided herein is a computer-readable storage medium configured to store at least one program including instructions that, when executed by at least one processor, cause the at least one processor to perform operations for a UE. The operations include: detecting an SSB on a cell, wherein the SSB includes a PSS, an SSS, and a PBCH; obtaining information regarding whether an SIB1 is on-demand SI from the SSB; transmitting an SIB1 request based on the SIB 1 being the on-demand SI; monitoring a PDCCH related to the SIB1 based on the SIB1 request; and receiving a PDSCH carrying the SIB1 based on detection of the PDCCH.

In another aspect of the present disclosure, provided herein is a computer program stored on a computer-readable storage medium. The computer program includes at least one program code including instructions that, when executed, cause at least one processor to perform operations. The operations include: detecting an SSB on a cell, wherein the SSB includes a PSS, an SSS, and a PBCH; obtaining information regarding whether an SIB1 is on-demand SI from the SSB; transmitting an SIB1 request based on the SIB1 being the on-demand SI; monitoring a PDCCH related to the SIB1 based on the SIB1 request; and receiving a PDSCH carrying the SIB1 based on detection of the PDCCH.

In another aspect of the present disclosure, provided herein is a method of transmitting, by a base station (BS), a downlink signal to a UE in a wireless communication system. The method includes: transmitting an SSB on a cell, wherein the SSB includes a PSS, an SSS, and a PBCH, and wherein the SSB includes information regarding whether an SIB1 is on-demand SI; receiving an SIB1 request based on the SIB1 being the on-demand SI; transmitting a PDCCH related to the SIB1 based on the SIB 1 request; and transmitting a PDSCH carrying the SIB1.

In a further aspect of the present disclosure, provided herein is a provided herein is a BS configured to transmit a downlink signal to a UE in a wireless communication system. The BS includes: at least one transceiver; at least one processor; and at least one computer memory operably connected to the at least one processor and storing instructions that, when executed, cause the at least one processor to perform operations. The operations include: transmitting an SSB on a cell, wherein the SSB includes a PSS, an SSS, and a PBCH, and wherein the SSB includes information regarding whether an SIB1 is on-demand SI; receiving an SIB1 request based on the SIB1 being the on-demand SI; transmitting a PDCCH related to the SIB1 based on the SIB1 request; and transmitting a PDSCH carrying the SIB1.

In each aspect of the present disclosure, the information regarding whether the SIB1 is the on-demand SI may be obtained based on at least one of a specific bit in the PBCH, a synchronization signal sequence, or a demodulation reference signal (DMRS) sequence for the PBCH.

In each aspect of the present disclosure, the information regarding whether the SIB1 is the on-demand SI may be obtained based on an SIB1-related PDCCH configuration field in a master information block (MIB) carried by the PBCH.

In each aspect of the present disclosure, the method or operations may include: based on the SIB1-related PDCCH configuration field having a predetermined value, determining whether the SIB1 is the on-demand SI; and based on a determination that the SIB1 is the on-demand SI, transmitting the SIB1 request.

In each aspect of the present disclosure, the information regarding whether the SIB1 is the on-demand SI may be obtained based on an SSB subcarrier offset field in an MIB carried by the PBCH.

In each aspect of the present disclosure, the method or operations may include: based on the SSB subcarrier offset field in the MIB having a predetermined value, determining whether the SIB1 is the on-demand SI; and based on a determination that the SIB1 is the on-demand SI, transmitting the SIB1 request.

In each aspect of the present disclosure, transmitting the SIB1 request may include transmitting a random access channel (RACH) related to the SSB, and the SIB1 may be related to a predetermined SSB index corresponding to the RACH.

In each aspect of the present disclosure, transmitting the SIB1 request may include transmitting a RACH related to the SSB, and the SIB1 may be related to all transmitted SSB indices.

The foregoing solutions are merely a part of the examples of the present disclosure and various examples into which the technical features of the present disclosure are incorporated may be derived and understood by persons skilled in the art from the following detailed description.

**Advantageous Effects**

According to embodiment(s) of the present disclosure, methods and/or procedures for energy saving energy of a base station (BS) and a user equipment (UE) may be provided.

According to embodiment(s) of the present disclosure, methods and/or procedures for a BS to transmit common signals/channels may be provided.

According to embodiment(s) of the present disclosure, methods and/or procedures for a BS to operate for network energy saving (NES) purposes by performing transmission/reception of a specific signal/channel based on detection of an uplink (UL) wake-up signal (WUS) may be provided.

According to embodiment(s) of the present disclosure, methods and/or procedures for secondary cell (SCell) activation of a UE may be provided.

According to embodiment(s) of the present disclosure, methods and/or procedures for compensating load-based cell activation may be provided.

According to embodiment(s) of the present disclosure, methods and/or procedures for a UE to adjust the power of a UL WUS may be provided.

According to implementation(s) of the present disclosure, the power consumption of the BS and the UE may be reduced.

The effects according to the present disclosure are not limited to what has been particularly described hereinabove and other effects not described herein will be more clearly understood by persons skilled in the art related to the present disclosure from the following detailed description.

## BRIEF DESCRIPTION OF THE DRAWINGS

FIG. 1 illustrates an example of a communication system 1 to which implementations of the present disclosure are applied.

FIG. 2 is a block diagram illustrating examples of communication devices capable of performing a method according to the present disclosure.

FIG. 3 illustrates another example of a wireless device capable of performing implementation(s) of the present disclosure.

FIG. 4 illustrates an example of a frame structure available in a wireless communication system such as a 3rd Generation Partnership Project (3GPP)-based wireless communication system.

FIG. 5 illustrates a resource grid of a slot.

FIG. 6 illustrates an example of physical channels used in a 3GPP-based communication system and a process for signal transmission/reception using the channels.

FIG. 7 illustrates a system information (SI) acquisition procedure.

FIG. 8 illustrates random access procedures applicable to implementation(s) of the present disclosure.

FIG. 9 illustrates multiplexing patterns for a synchronization signal block (SSB) and a control resource set (CORESET).

FIG. 10 illustrates a discontinuous reception (DRX) operation applicable to implementation(s) of the present disclosure.

FIG. 11 illustrates a case in which a long DRX cycle and a short DRX cycle are configured.

FIG. 12 illustrates transmission of system information block 1 (SIB1) in a 3GPP-based system.

FIG. 13 illustrates a DL channel reception flow in a UE according to some implementations of the present disclosure.

FIG. 14 illustrates a DL channel transmission flow in a BS according to some implementations of the present disclosure.

## DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, etc. CDMA may be implemented by radio technology such as universal terrestrial radio access (UTRA) or CDMA2000⨄. TDMA may be implemented by radio technology such as global system for mobile communications (GSM), general packet radio service (GPRS), enhanced data rates for GSM evolution (EDGE), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE, and 3GPP new radio or new radio access technology (NR) is an evolved version of 3GPP LTE/LTE-A.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

For dual connectivity (DC) operation, the term primary SCG cell (PSCell) refers a secondary cell group (SCG) cell to which a UE performs random access when performing RRC reconfiguration and synchronization processes.

In a dual connectivity (DC) operation, the term special cell (SpCell) refers to a Pcell of a master cell group (MCG) or a Pcell of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE in which CA is configured and DC is not configured, a Pcell PUCCH group including a Pcell and 0 or more Scells and a Scell PUCCH group including only Scell(s) may be configured. In the case of an Scell, an Scell (hereinafter referred to as a PUCCH cell) in which a PUCCH related to the corresponding cell may be configured. An Scell that indicates a PUCCH Scell belongs to an Scell PUCCH group, PUCCH transmission of related UCI on the PUCCH Scell is performed, an Scell that does not indicate a PUCCH Scell or indicates a Pcell as a cell for PUCCH transmission belongs to a Pcell PUCCH group, and PUCCH transmission of the related UCI is performed on the Pcell.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUSCH/PUCCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DL data/DL control information on or through a PBCH/PDCCH/PDSCH, respectively.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

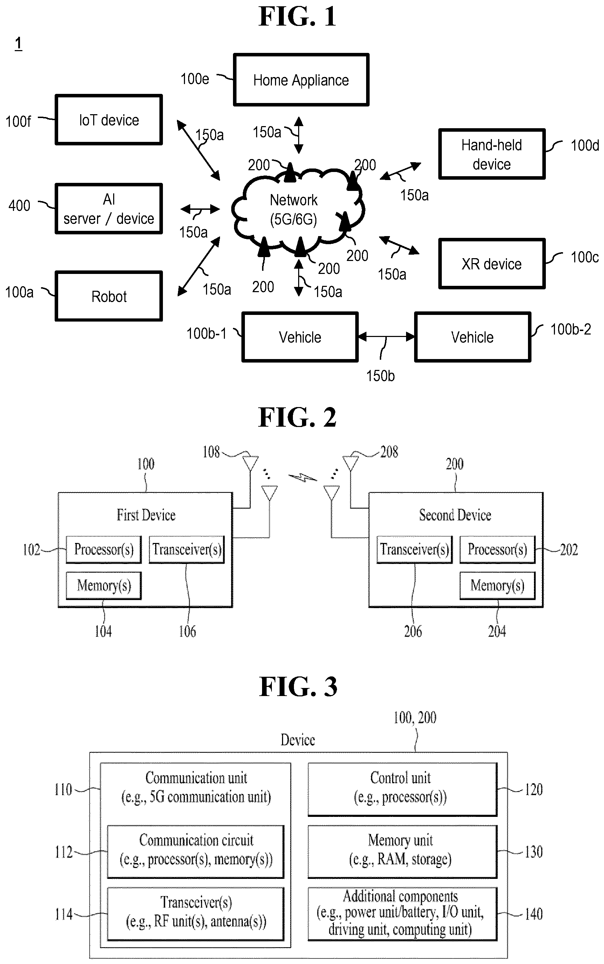

FIG. 1 illustrates an example of a communication system 1 to which implementations of the present disclosure are applied.

Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device 200a may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and side link communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 2 is a block diagram illustrating examples of communication devices capable of performing a method according to the present disclosure.

Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the afore-described/proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the afore-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the afore-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the afore-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure.

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

A communication device of the present disclosure includes at least one processor; and at least one computer memory operably connected to the at least one processor and configured to store instructions for causing, when executed, the at least one processor to perform operations according to example(s) of the present disclosure described later.

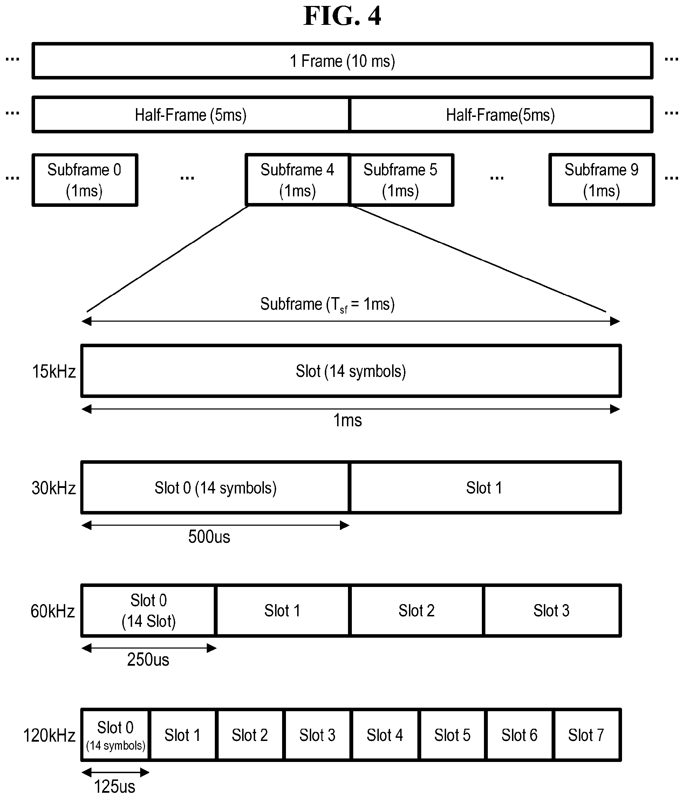

FIG. 4 illustrates an example of a frame structure available in a wireless communication system such as a 3rd Generation Partnership Project (3GPP)-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of $T_f = (\Delta f_{max}*N_f/100)*T_c = 10$ ms and is divided into two half-frames of 5 ms each. A basic time unit for NR is $T_c = 1/(\Delta f_{max}*N_f)$ where $\Delta f_{max} = 480*10^3$ Hz and $N_f = 4096$. For reference, a basic time unit for LTE is $T_s = 1/(\Delta f_{ref}*N_{f,ref})$ where $\Delta f_{ref} = 15*10^3$ Hz and $N_{f,ref} = 2048$. $T_c$ and $T_f$ have the relationship of a constant $\kappa = T_c/T_f = 64$. Each half-frame includes 5 subframes and a duration $T_{sf}$ of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing $\Delta f = 2^u*15$ kHz. The table below shows the number of OFDM symbols ($N^{slot}_{symb}$) per slot, the number of slots ($N^{frame,u}_{slot}$) per frame, and the number of slots ($N^{subtrame,u}_{slot}$) per subframe.

Table 1

| $u$ | $N^{slot}_{symb}$ | $N^{frame,u}_{slot}$ | $N^{subtrame,u}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The table below shows the number of OFDM symbols per slot, the number of slots per frame, and the number of slots per subframe, according to the subcarrier spacing $\Delta f = 2^u*15$ kHz.

Table 2

| $u$ | $N^{slot}_{symb}$ | $N^{frame,u}_{slot}$ | $N^{subtrame,u}_{slot}$ |
|---|---|---|---|
| 2 | 12 | 40 | 4 |

For a subcarrier spacing configuration u, slots may be indexed within a subframe in ascending order as follows: $n^u_s \in \{0, ..., n^{subframe,u}_{slot} - 1\}$ and indexed within a frame in ascending order as follows: $n^u_{s,f} \in \{0, ..., n^{frame,u}_{slot} - 1\}$.

NR frequency bands are defined as two types of frequency ranges, i.e., FR1 and FR2. FR2 is also referred to as millimeter wave (mmW). The following table shows frequency ranges within which NR may operate.

Table 3

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

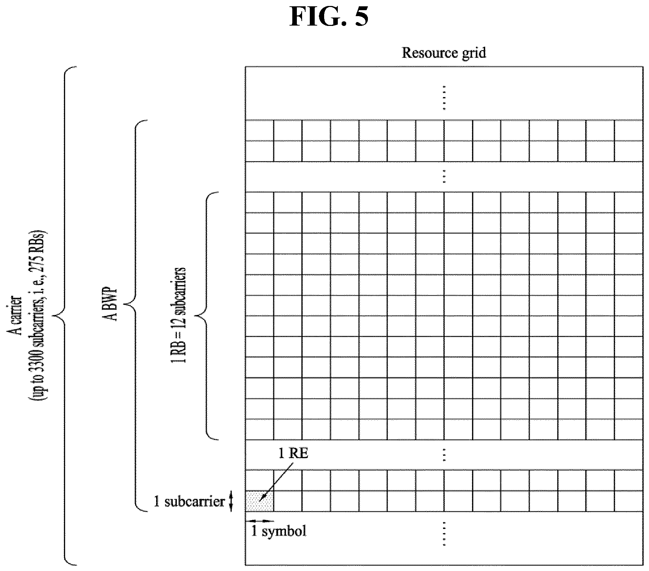

FIG. 5 illustrates a resource grid of a slot.

The slot includes multiple (e.g., 14 or 12) symbols in the time domain. For each numerology (e.g., subcarrier spacing) and carrier, a resource grid of $N^{size,u}_{grid,x} * N^{RB}_{sc}$ subcarriers and $N^{subframe,u}_{symb}$ OFDM symbols is defined, starting at a common resource block (CRB) $N^{start,u}_{grid}$ indicated by higher layer signaling (e.g. RRC signaling), where $N^{size,u}_{grid,x}$ is the number of resource blocks (RBs) in the resource grid and the subscript x is DL for downlink and UL for uplink. $N^{RB}_{sc}$ is the number of subcarriers per RB. In the 3GPP-based wireless communication system, $N^{RB}_{sc}$ is typically 12. There is one resource grid for a given antenna port $p$, a subcarrier spacing configuration $u$, and a transmission link (DL or UL). The carrier bandwidth $N^{size,u}_{grid}$ for the subcarrier spacing configuration u is given to the UE by a higher layer parameter (e.g., RRC parameter). Each element in the resource grid for the antenna port $p$ and the subcarrier spacing configuration $u$ is referred to as a resource element (RE) and one complex symbol may be mapped to each RE. Each RE in the resource grid is uniquely identified by an index k in the frequency domain and an index $l$ representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration $u$. The center of subcarrier 0 of CRB 0 for the subcarrier spacing configuration $u$ is equal to 'Point A' which serves as a common reference point for RB grids. The PRBs are defined within a bandwidth part (BWP) and numbered from 0 to $N^{size}_{BWP,i}-1$, where i is a number of the BWP. The relation between a PRB $n_{PRB}$ in a BWP i and a CRB $n_{CRB}$ is given by: $n_{PRB} = n_{CRB} + N^{size}_{BWP,i}$, where $N^{size}_{BWP,i}$ is a CRB in which the BWP starts relative to CRB 0. The BWP includes a plurality of consecutive RBs in the frequency domain. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB $N^{start}_{BWP} = O_{carrier} + RB_{start}$ and the number of contiguous RBs $N^{size}_{BWP} = L_{RB}$ provided by an RRC parameter *locationAndBandwidth*, which indicates an offset $RB_{set}$ and a length $L_{RB}$ as a resource indicator value (RIV) on the assumption of $N^{star}_{BWP} = 275$, and a value $O_{carrier}$ provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to $N^{size,u}_{BWP,i}-1$, where i denotes a BWP number. The VRBs may be mapped to PRBs according to interleaved mapping or non-interleaved mapping. In some implementations, VRB n may be mapped to PRB n for non-interleaved VRB-to-PRB mapping.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

The PDCCH is transmitted through a control resource set (CORESET). One or more CORESETs may be configured for a UE. The CORESET is determined based on the following parameters.

- *controlResourceSetId*: ID of CORESET.
- *frequencyDomainResources*: Frequency domain resources of CORESET. The frequency domain resources of the CORESET are indicated through a bitmap, and each bit corresponds to an RB group (six consecutive RBs). For example, the most significant bit (MSB) of the bitmap corresponds to a first RB group in a BWP. The RB group corresponding to a bit having a bit value of 1 is allocated to a frequency domain resource of the CORESET.
- *duration*: Time domain resources of CORESET. The time domain resources of the CORESET represents the number of consecutive OFDMA symbols that constitute the CORESET. For example, the duration has a value from 1 to 3.
- *cce-REG-MappingType*: CCE-to-REG mapping type. An inerleaved type and a non-interleaved type are supported.
- *precoderGranularity*: Precoder granularity in the frequency domain.
- *tci-StatesPDCCH*: Information indicating a transmission configuration indication (TCI) state for a PDCCH (e.g., TCI-StateID). The TCI state is used to provide a quasi-co-location (QCL) relationship between DL RS(s) and PDCCH DMRS ports within an RS set (TCI-state).
- *tci-PresentInDCI*: Whether a TCI field is included in the DCI.
- *pdcch-DMRS-ScramblingID*: Information used to initialize a PDCCH DMRS scrambling sequence.

A CORESET, which is a set of time-frequency resources on which the UE is capable of monitoring a PDCCH, may be defined and/or configured. The UE may be configured with one or more CORESETs. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration. A search space set is determined based on the following parameters provided to the UE by the BS.

- *serachSpaceId*: SS set identifier that identifies an SS set.
- *controlResourceSetId*: Identifier that identifies the CORESET related to the search space.
- *monitoringSlotPeriodicityAndOffset*: PDCCH monitoring periodicity and PDCCH monitoring offset to configure slots for PDCCH monitoring.
- *duration*: The number of consecutive slots that last in a search space at each occasion, i.e., at each period, as given by *monitoringSlotPeriodicityAndOffset.*
- *monitoringSymbolsWithinSlot*: a PDCCH monitoring pattern within a slot, indicating first symbol(s) of the CORESET within a slot for PDCCH monitoring.
- *nrofCandidates*: a number of PDCCH candidates per CCE aggregation level.

A UE monitors PDCCH candidates in PDCCH monitoring occasions only. The UE determines a PDCCH monitoring occasion from the PDCCH monitoring periodicity, the PDCCH monitoring offset, and the PDCCH monitoring pattern within a slot. The parameter *monitoringSymbolsWithinSlot* may indicate the first symbol(s) for PDCCH monitoring in the slots configured for PDCCH monitoring (e.g., see *monitoringSlotPeriodicityAndOffset* and *duration*). For example, when *monitoringSymbolsWithinSlot* is a 14-bit parameter, the most significant (leftmost) bit may represent the first OFDM symbol in the slot, and the second most significant (leftmost) bit may represent the second OFDM symbol in the slot. In this way, the bits of *monitoringSymbolsWithinSlot* may represent the 14 OFDM symbols of the slot, respectively. For example, bit(s) set to 1 among the bits in *monitoringSymbolsWithinSlot* may identify the first symbol(s) of the CORESET in the slot.

The following table illustrates search space sets and related RNTIs thereof, along with usage examples.

Table 4

| Search Space | Type | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI(s) | |
| UE Specific | UE Specific | C-RNTI, MCS-C-RNTI or CS-RNTI(s) | User specific PDSCH decoding |

The following table shows DCI formats carried by a PDCCH.

Table 5

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH. For a CSS, DCI format 0_0 and DCI format 1_0 have fixed sizes after the BWP size is initially given by RRC. For a USS, DCI format 0_0 and DCI format 1_0 are fixed in size in fields other than a frequency domain resource assignment (FDRA) field, and the FDRA field may vary in size by configuration of a related parameter by the BS. In DCI format 0_1 and DCI format 1_1, the size of the DCI field may be changed by various RRC reconfigurations by the BS. DCI format 2_0 may be used to transfer dynamic slot format information (e.g., SFI DCI) to the UE, and DCI format 2_1 may be used to transfer downlink pre-emption information to the UE. DCI format 2_0 and/or DCI format 2_1 may be transferred to UEs within a corresponding group via a group common PDCCH, which is a PDCCH transferred to UEs defined as one group.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port. The PDSCH may be dynamically scheduled by the PDCCH (dynamic scheduling) or semi-statically scheduled based on higher layer (e.g., RRC) signaling (and/or Layer 1 (L1) signaling (e.g.,

PDCCH)) (Configured Scheduling (CS)). Therefore, in dynamic scheduling, PDSCH transmission is accompanied by the PDCCH, but in the CS, PDSCH transmission is not accompanied by the PDCCH. The CS includes semi-persistent scheduling (SPS).

A PUCCH is a physical layer UL channel for uplink control information (UCI) transmission. The PUCCH carries UCI. The UCI includes the following information.

- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.

In the present disclosure, for convenience, PUCCH resources configured/indicated for/to the UE by the BS for HARQ-ACK, SR, and CSI transmission are referred to as an HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 6.

(0) PUCCH format 0 (PF0 or F0)

- Supported UCI payload size: up to K bits (e.g., K=2)
- Number of OFDM symbols constituting a single PUCCH: 1 to X symbols (e.g., X=2)
- Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
- Configuration for PUCCH format 0 includes the following parameters for a corresponding PUCCH resource: an index for initial cyclic shift, the number of symbols for PUCCH transmission, and/or the first symbol for PUCCH transmission.

(1) PUCCH format 1 (PF1 or F1)

- Supported UCI payload size: up to K bits (e.g., K=2)
- Number of OFDM symbols constituting a single PUCCH: Y to Z symbols (e.g., Y=4 and Z=14)
- Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
- Configuration for PUCCH format 1 includes the following parameters for a corresponding PUCCH resource: an index for initial cyclic shift, the number of symbols for PUCCH transmission, the first symbol for PUCCH transmission, and/or an index for the OCC.

(2) PUCCH format 2 (PF2 or F2)

- Supported UCI payload size: more than K bits (e.g., K=2)
- Number of OFDM symbols constituting a single PUCCH: 1 to X symbols (e.g., X=2)
- Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
- Configuration for PUCCH format 2 includes the following parameters for a corresponding PUCCH resource: the number of PRBs, the number of symbols for PUCCH transmission, and/or the first symbol for PUCCH transmission.

(3) PUCCH format 3 (PF3 or F3)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).

Configuration for PUCCH format 3 includes the following parameters for a corresponding PUCCH resource: the number of PRBs, the number of symbols for PUCCH transmission, and/or the first symbol for PUCCH transmission.

(4) PUCCH format 4 (PF4 or F4)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
- Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

Table 6

| PUCCH format | Length in OFDM symbols $N^{PUCCH}_{symb}$ | Number of bits | Usage | Etc. |
|---|---|---|---|---|
| 0 | 1-2 | =<2 | HARQ, SR | Sequence selection |
| 1 | 4-14 | =<2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM(no UE multiplexing) |
| 4 | 4-14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, $N_{UCI}$.

- PUCCH resource set #0, if the number of UCI bits =< 2
- PUCCH resource set #1, if 2< the number of UCI bits =< $N_1$
  ...
- PUCCH resource set #(K-1), if $N_{K-2}$ < the number of UCI bits =< $N_{K-1}$

Here, K represents the number of PUCCH resource sets (K>1) and $N_i$ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4.

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

The PUSCH carries UL data (e.g., UL-SCH TB) and/or UL control information (UCI) and is transmitted based on a cyclic prefix-orthogonal frequency division multiplexing (CP-OFDM) waveform or a discrete Fourier transform-spread-OFDM (DFT-s-OFDM) waveform. When the PUSCH is transmitted based on the DFT-s-OFDM waveform, the UE transmits the PUSCH by applying transform precoding. For example, when transform precoding is disabled, the UE may transmit the PUSCH based on the CP-OFDM waveform, and when transform precoding is enabled, the UE may transmit the PUSCH based on the CP-OFDM waveform or the DFT-s-OFDM waveform. The PUSCH may be dynamically scheduled by the PDCCH (dynamic scheduling) or semi-statically scheduled based on higher layer (e.g., RRC) signaling (and/or Layer 1 (L1) signaling (e.g., PDCCH)) (Configured Scheduling (CS)). Therefore, in dynamic scheduling, PUSCH transmission is accompanied by the PDCCH, but in the CS, PUSCH transmission is not accompanied by the PDCCH. The CS includes Type-1 configured grant (CG) PUSCH transmission and Type-2 CG PUSCH transmission. In the Type-1 CG, all parameters for PUSCH transmission are signaled via a higher layer. In the Type-2 CG, some of the parameters for PUSCH transmission are signaled via a higher layer and the remaining parameters are signaled by the PDCCH. Basically, in the CS, PUSCH transmission is not accompanied by the PDCCH.

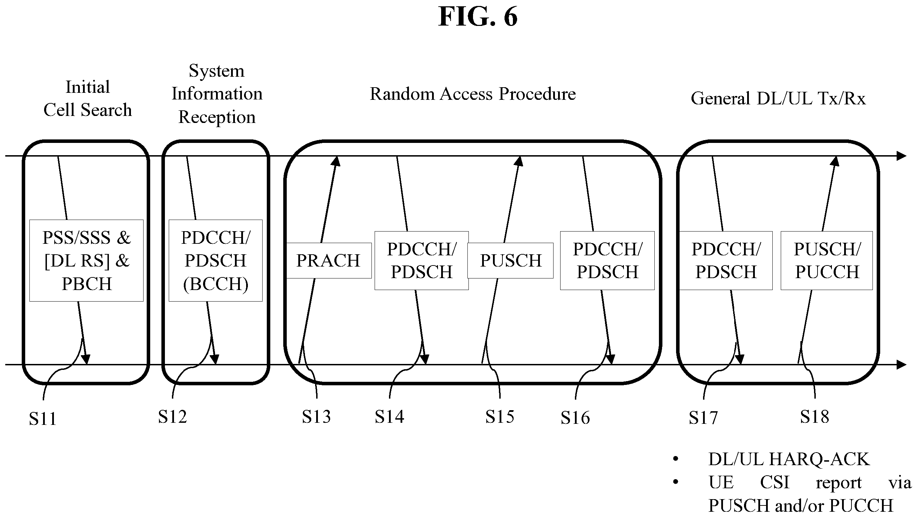

FIG. 6 is a diagram illustrating physical channels and a signal transmission/reception procedure using the physical channels in a 3GPP-based communication system as an exemplary wireless communication system.

FIG. 6 illustrates an example of physical channels used in a 3GPP-based communication system and a process for signal transmission/reception using the channels.

When the UE is powered on or when the UE has been disconnected from the wireless communication system, the UE searches for a cell to camp on and performs initial cell search involving synchronization with a BS in the cell (S11). For the initial cell search, the UE receives a synchronization signal block (SSB) (also referred to as a SSB/PBCH block) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may camp on the cell. Subsequently, the UE may monitor a PDCCH in the cell and acquire more specific system information by receiving a PDSCH based on DCI carried on the PDCCH (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). When the UE fails in receiving the RAR directed to the UE, the UE may attempt to retransmit the preamble. In the case of contention-based random access, the UE may transmit a PUSCH based on a UL resource assignment included in the RAR (S15), and perform a contention resolution procedure including reception of a PDCCH and a PDSCH corresponding to the PDCCH (S16).

After the above procedure, the UE may receive a PDCCH/PDSCH from the BS (S17) and transmit a PUSCH/-PUCCH to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), and/or a rank indication (RI). In general, UCI is transmitted on the PUCCH. However, when control information and data should be transmitted simultaneously, the control information may be transmitted on the PUSCH. In addition, the UE may transmit the UCI aperiodically on the PUSCH, upon receipt of a request/command from a network.

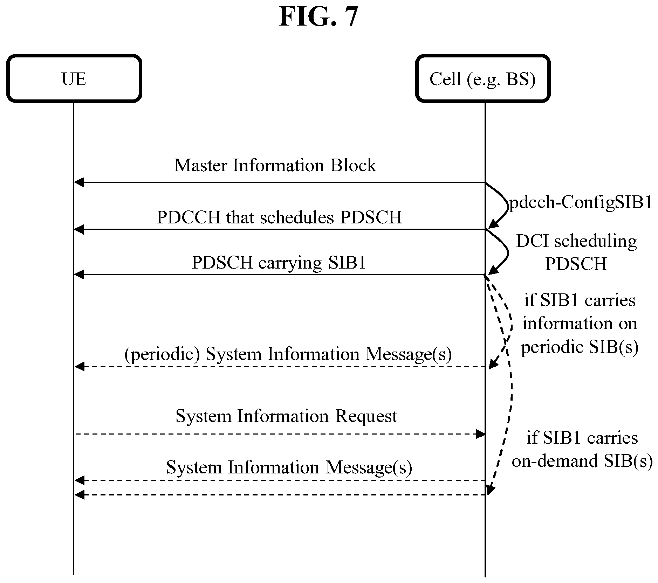

FIG. 7 illustrates a system information (SI) acquisition procedure.

The UE may acquire access stratum/non-access stratum (AS/NAS) information from the SI acquisition procedure. The SI acquisition procedure may be applied to UEs in the following states: RRC_IDLE, RRC_INACTIVE, and RRC _CONNECTED. RRC_CONNECTED refers to a state in which the UE has established an RRC connection with the network. RRC_IDLE refers to a state in which the UE is not registered in a specific cell and does not receive AS context and other information from the network. RRC_INACTIVE refers to a state in which the UE remains in a state called CM-CONNECTED where the UE has a signaling connection with the core network for connection management (CM) and is capable of moving within an area defined by the radio access network (RAN) (e.g., BS(s)) without notifying the RAN. CM_CONNECTED refers to a state in which the UE has a NAS signaling connection with the core network. CM_IDLE refers to a state in which the UE has no NAS signaling connection.

In the 3GPP based system, system information (SI) may be classified into a master information block (MIB) and a plurality of system information blocks (SIBs). MIB and a plurality of SIBs are divided into minimum system information (SI) and other SI, where the minimum SI is comprised of MIB and SystemInformationBlock1 (SIB1) and comprises basic information required for initial access and information for acquiring any other SI. SIB1 may be referred to as remaining minimum system information (RMSI). The details may be found in the following.

[0123]    - The MIB is always transmitted on the BCH with a periodicity of 80 ms and repetitions made within 80 ms. The MIB includes information/parameters related to SIB1 reception and is transmitted through the PBCH in the SSB. During initial cell selection, the UE assumes that a half-frame including SSB(s) is repeated with a periodicity of 20 ms. The UE may determine based on the MIB whether there is a control resource set (CORESET) for a Type0-PDCCH common search space. The Type0-PDCCH common search space is a kind of PDCCH search space and used to transmit a PDCCH that schedules an SI message. When the Type0-PDCCH common search space exists, the UE may determine based on information in the MIB (e.g., pdcch-ConfigSIB1) (i) a plurality of consecutive RBs and one or more consecutive symbols included in a CORESET and (ii) a PDCCH occasion (i.e., a time-domain position for PDCCH reception). When there is no Type0-PDCCH common search space, pdcch-ConfigSIB1 provides information regarding a frequency position where the SSB/SIB1 exists and information regarding a frequency range where the SSB/SIB 1 does not exist.

The MIB may include the following field(s).

- subCarrierSpacingCommon   ENUMERATED {scs15or60, scs30or120},

- ssb-SubcarrierOffset      INTEGER (0..15),

- pdcch-ConfigSIB1          INTEGER (0..255),

...

- dmrs-TypeA-Position       ENUMERATED {pos2, pos3},

The subCarrierSpacingCommon field indicates the SCS for SIB1, Msg2/4 for initial access, paging, and broadcast SI messages. When the UE acquires the MIB on an FR1 carrier frequency, the value of scs15or60 corresponds to 15 kHz. When the UE acquires the MIB on an FR2 carrier frequency, the value of scs30or120 corresponds to 120 kHz.

The pdcch-ConfigSIB1 field determines a common CORESET, a CSS, and necessary PDCCH parameters. If the ssb-SubcarrierOffset field indicates that SIB1 is not present, the pdcch-ConfigSIB1 field represents the frequency position where the UE may find an SS/PBCH block containing SIB1 or the frequency range where the network does not provide an SS/PBCH block containing SIB1.

The ssb-SubcarrierOffset field corresponds to $k_{SSB}$, where $k_{SSB}$ represents the frequency domain offset between the SSB and the entire resource block grid and is expressed as the number of subcarriers. The range of values for the ssb-SubcarrierOffset field may be extended by an additional MSB encoded within the PBCH, as specified in 3GPP TS 38.213. The ssb-SubcarrierOffset field may also indicate that the cell does not provide SIB1 and that there is no CRESET#0 configured by the MIB.

The dmrs-TypeA-Position field indicates the position of the first DMRS for DL (e.g., PDSCH) and UL (e.g., PUSCH). In addition, pos2 represents the second symbol of a slot, while pos2 represents the third symbol of the slot.

If $k_{SSB}$ (for FR1) $\leq$ 23 or $k_{SSB}$ (for FR2) $\leq$ 11, the UE may determine that there is a CORESET for the Type0-PDCCH CSS. If $k_{SSB}$ (for FR1) > 23 or $k_{SSB}$ (for FR2) > 11, the UE may determine that there is no CORESET for the Type0-PDCCH CSS.

-  The SIB1 is transmitted on the downlink shared channel (DL-SCH) with a periodicity of 160 ms and variable transmission repetition periodicity within 160 ms. The default transmission repetition periodicity of SIB1 is 20 ms but the actual transmission repetition periodicity is up to network implementation. SIB1 includes information regarding availability and scheduling (e.g., transmission periodicity and SI-window size) of the remaining SIBs (hereinafter referred to as SIBx, where x is an integer greater than and equal to 2). For example, SIB1 may indicate whether SIBx is periodically broadcast or provided at the request of the UE in an on-demand way. When SIBx is provided in an on-demand way, SIB1 may include information necessary for the UE to perform an SI request. SIB1 is a cell-specific SIB. A PDCCH that schedules SIB1 is transmitted in the Type0-PDCCH common search space, and SIB1 is transmitted through a PDSCH indicated by the PDCCH.

-  SIBx is included in the SI message and transmitted through the PDSCH. Each SI message is transmitted within a periodically occurring time window (i.e., SI-window).

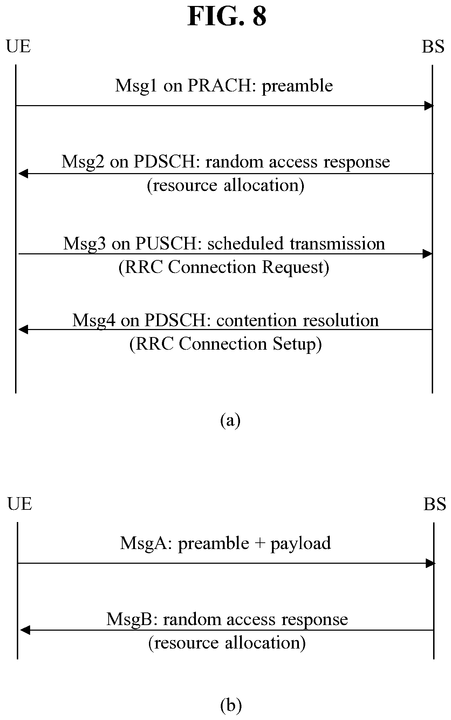

FIG. 8 illustrates random access procedures applicable to implementation(s) of the present disclosure. Particularly, FIG. 8(a) illustrates a 4-step random access procedure, and FIG. 8(b) illustrates a 2-step random access procedure.

A random access procedure may be used for various purposes including initial access, UL synchronization adjustment, resource allocation, handover, radio link reconfiguration after radio link failure, and positioning. Random access procedures are classified into a contention-based procedure and a dedicated (i.e., non-contention-based) procedure. The contention-based random access procedure generally involves initial access, whereas the dedicated random access procedure is used for UL synchronization reconfiguration in the event of handover, DL data arrival at a network, and positioning. In the contention-based random access procedure, the UE randomly selects a random access (RA) preamble. Accordingly, it is possible for a plurality of UEs to simultaneously transmit the same RA preamble, and thus a subsequent contention resolution process is required. In the dedicated random access procedure, the UE uses an RA preamble uniquely allocated to the UE by the BS. Therefore, the UE may perform the random access procedure without collision with other UEs.

Referring to FIG. 8(a), the contention-based random access procedure includes the following four steps. The messages transmitted in steps 1 to 4 may be referred to as message 1 (Msg1) to message 4 (Msg4), respectively.

- Step 1: The UE transmits an RA preamble on a PRACH.
- Step 2: The UE receives an RAR on a PDSCH from the BS.
- Step 3: The UE transmits UL data on a PUSCH to the BS. The UL data includes a Layer 2 (L2)/Layer 3 (L3) message.
- Step 4: The UE receives a contention resolution message on the PDSCH from the BS.

The UE may receive random access information in system information from the BS. For example, information regarding RACH occasions associated with SSBs on a cell may be provided in system information. The UE may select an SSB whose reference signal received power (RSRP), which is measured based on the SSB, exceeds a threshold from among SSBs received on the cell. Then, the UE may transmit an RA preamble on a PRACH associated with the selected SSB. For example, When the UE needs random access, the UE transmits Msg1 (e.g., a preamble) on a PRACH to the BS. The BS may identify each RA preamble by a time/frequency resource (RA occasion (RO)) carrying the RA preamble, and a preamble index (PI). Upon receipt of the RA preamble from the UE, the BS transmits an RAR message to the UE on a PDSCH. To receive the RAR message, the UE monitors an L1/L2 control channel (PDCCH) with a cyclic redundancy check (CRC) masked with a random access-RNTI (RA-RNTI), including scheduling information for the RAR message, within a preconfigured time window (e.g., ra-ResponseWindow). When receiving scheduling information on the PDCCH masked with the RA-RNTI, the UE may receive an RAR message on a PDSCH indicated by the scheduling information. The UE then checks whether there is an RAR directed to the UE in the RAR message. The presence or absence of the RAR directed to the UE may be determined by checking whether there is a random access preamble ID (RAPID) for the preamble transmitted by the UE. The index of the preamble transmitted by the UE may be identical to the RAPID. The RAR includes the index of the corresponding RA preamble, timing offset information (e.g., timing advance command (TAC)) for UL synchronization, UL scheduling information (e.g., UL grant) for Msg3 transmission, and UE temporary identification information (e.g., temporary-C-RNTI (TC-RNTI)). Upon receipt of the RAR, the UE transmits Msg3 on a PUSCH according to the UL scheduling information and the timing offset value in the RAR. Msg3 may include the ID (or global ID) of the UE. Further, Msg3 may include RRC connection request-related information (e.g., RRCSetupRequest message) for initial access to the network. After receiving Msg3, the BS transmits a contention resolution message, that is, Msg4 to the UE. When the UE receives the contention resolution message and succeeds in contention resolution, the TC-RNTI is changed to a C-RNTI. Msg4 may include the ID of the UE/RRC connection-related information (e.g., an RRCSetup message). When information transmitted in Msg3 does not match information received in Msg4 or when the UE has not received Msg4 for a predetermined time, the UE may determine that the contention resolution has failed and retransmit Msg3.

The dedicated random access procedure includes the following three steps. Messages transmitted in step 0 to step 2 may be referred to as Msg0 to Msg2, respectively. The BS may trigger the dedicated random access procedure by a PDCCH serving the purpose of commanding RA preamble transmission (hereinafter, referred to as a PDCCH order).

- Step 0: The BS allocates an RA preamble to the UE by dedicated signaling.
- Step 1: The UE transmits the RA preamble on a PRACH.
- Step 2: The UE receives an RAR on a PDSCH from the BS.

Step 1 and step 2 of the dedicated random access procedure may be the same as step 1 and step 2 of the contention-based random access procedure.

The NR system may require lower latency than the legacy system. Particularly for a latency-sensitive service such as URLLC, the 4-step random access procedure may not be preferable. A low-latency random access procedure may be needed for various scenarios in the NR system. When implementation(s) of the present disclosure are realized along with a random access procedure, the implementation(s) of the present disclosure may be carried out together with the following 2-step random access procedure to reduce latency involved in the random access procedure.

Referring to FIG. 8(b), the 2-step random access procedure may be performed in two steps: transmission of MsgA from the UE to the BS and transmission of MsgB from the BS to the UE. The MsgA transmission may include transmission of an RA preamble on a PRACH and transmission of UL payload on a PUSCH. In the MsgA transmission, the PRACH and the PUSCH may be transmitted in time division multiplexing (TDM). Alternatively, the PRACH and the PUSCH may be transmitted in frequency division multiplexing (FDM) in the MsgA transmission.

Upon receipt of MsgA, the BS may transmit MsgB to the UE. MsgB may include an RAR for the UE.

An RRC connection request-related message (e.g., RRCSetupRequest message) requesting establishment of a connection between the RRC layer of the BS and the RRC layer of the UE may be included in the payload of MsgA. In this case, MsgB may be used to transmit RRC connection-related information (e.g., RRCSetup message). In contrast, the RRC connection request-related message (e.g., RRCSetupRequest message) may be transmitted on a PUSCH based on a UL grant in MsgB. In this case, RRC connection-related information (e.g., RRCSetup message) related to the RRC connection request may be transmitted on a PDSCH associated with the PUSCH transmission after the PUSCH transmission based on MsgB.

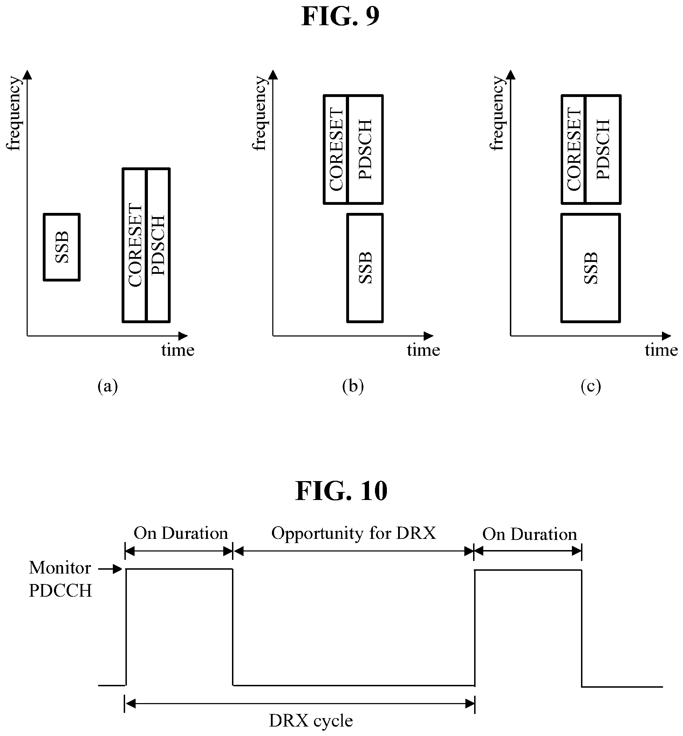

FIG. 9 illustrates multiplexing patterns for an SSB and a CORESET. Specifically, FIG. 9(a) shows SSB and CORESET multiplexing pattern 1, FIG. 9(b) shows SSB and CORESET multiplexing pattern 2, and FIG. 9(c) shows SSB and CORESET multiplexing pattern 3. The SSB and CORESET multiplexing patterns may be predetermined based on the frequency range (FR) to which a corresponding cell belongs or the SCS of an SSB or PDCCH.

As illustrated in FIG. 9, an SSB and CORESET may be multiplexed in the time domain, in both the time and frequency domains, or in the frequency domain.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

FIG. 10 illustrates a discontinuous reception (DRX) operation. In particular, FIG. 10 illustrates a DRX cycle for a UE in an RRC_CONNECTED state.

The UE may perform the DRX operation while performing a process and/or method according to some implementations of the present disclosure. A UE configured with the DRX may reduce power consumption by receiving a DL signal discontinuously. The DRX operation may be performed in an RRC_IDLE state, an RRC_INACTIVE state, and an RRC_CONNECTED state. In the RRC_IDLE and RRC_INACTIVE states, the DRX is used to discontinuously receive a paging signal. Hereinafter, DRX performed in RRC_CONNECTED state (RRC_CONNECTED DRX) is described.

Referring to FIG. 10, a DRX cycle is configured with an ON duration and an opportunity for DRX. The DRX cycle defines a time interval with which the ON duration is repeated periodically. The ON duration represents a time duration in which the UE monitors to receive the PDCCH. When the DRX is configured, the UE performs PDCCH monitoring during the ON duration. When the PDCCH is successfully detected while monitoring the PDCCH, the UE starts an inactivity timer and maintains the timer in an awake state. On the other hand, when no PDCCH is successfully detected while monitoring the PDCCH, the UE enters a sleep state after the ON duration ends. Therefore, when the DRX is configured, PDCCH monitoring/reception may be performed discontinuously in the time domain when performing methods and/or procedures according to some implementations of the present disclosure. For example, when the DRX is configured, the PDCCH reception occasion (e.g., slot having PDCCH search space) may be configured discontinuously according to the DRX configuration. On the other hand, when the DRX is not configured, PDCCH monitoring/reception may be performed continuously in the time domain when performing methods and/or procedures according to some implementations of the present disclosure. For example, when the DRX is not configured, the PDCCH reception opportunity (e.g., slot having PDCCH search space) may be configured consecutively. PDCCH monitoring may be limited during the time duration configured as a measurement gap regardless of whether the DRX is configured.

The following table shows a UE process related to the DRX. Referring to the table below, DRX configuration information is received via higher layer (e.g. RRC) signaling, and whether the DRX is turned on/off is controlled by a DRX command of the MAC layer. When the DRX is configured, the UE may perform PDCCH monitoring discontinuously as illustrated in FIG. 10.

Table 7

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following parameter information to define the DRX.

- *drx-OnDurationTimer:* The length of a start duration of the DRX cycle, also called the ON duration timer in the present disclosure
- *drx-SlotOffset:* Delay indication for slot before *drx-OnDurationTimer* starts
- *drx-StartOffset:* Specifies a subframe in which the DRX cycle starts
- *drx-InactivityTimer:* The length of the time duration in which the UE remains awake after a PDCCH opportunity is detected indicating initial UL or DL data, also called the inactivity timer in the present disclosure.

- *drx-HARQ-RTT-TimerDL*: The maximum time duration between reception of DL initial transmission and reception of DL retransmission
- *drx-HARQ-RTT-TimerDL:* The maximum time duration between reception of grant for UL initial transmission and reception of grant for UL retransmission
- *drx-RetransmissionTimerDL* (per DL HARQ process): The maximum time duration until DL retransmission is received.
- *drx-RetransmissionTimerUL* (per UL HARQ process): The maximum time duration until a grant for UL retransmission is received.
- *drx-LongCycleStartOffset:* Time length and starting point of the DRX cycle
- *drx-ShortCycle* (optional): Time length of short DRX cycle
- *drx-ShortCycleTimer* (optional): Short DRX cycle operation occasion

For example, a value in multiples of the short DRX cycle may be configured by drx-CycleTimer. For example, the value of n may correspond to n*drx-ShortCycle.

The UE may perform PDCCH monitoring on serving cells within a DRX group if the DRX group is within the active time. In this case, the DRX group refers to a group of serving cells that are configured by RRC and have the same DRX active time. When DRX is configured, the Active Time for serving Cells in a DRX group includes the time while i) drx-onDurationTimer or drx-InactivityTimer configured for the DRX group is running; or ii) drx-RetransmissionTimerDL or drx-RetransmissionTimerUL is running on any serving Cell in the DRX group; or ra-ContentionResoultionTimer or msgB-RsponseWindow is running; or a PDCCH indicating a new transmission addressed to the C-RNTI of a MAC entity of the UE has not been received after successful reception of a random access response for the Random Access Preamble not selected by the MAC entity among the contention-based random access preambles.

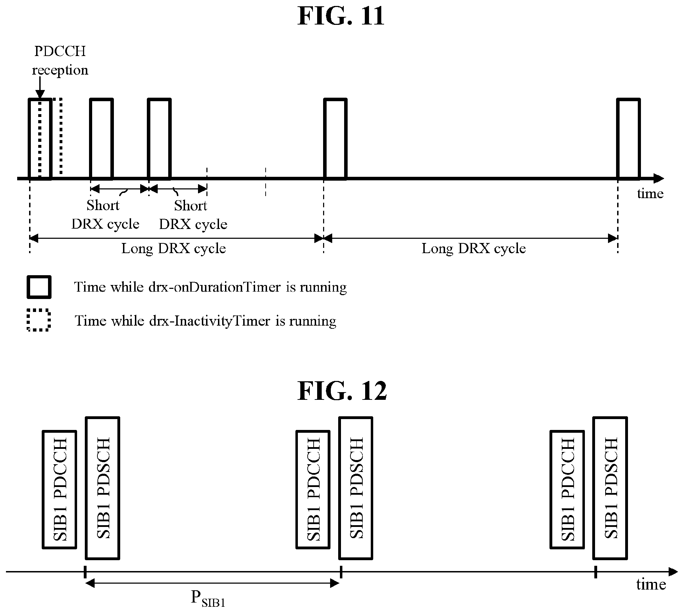

FIG. 11 illustrates a case in which a long DRX cycle and a short DRX cycle are configured. Specifically, FIG. 11 shows a case in which drx-ShortCycleTimer is set to 2.

The BS may configure a long DRX cycle and an additional short DRX cycle, which is shorter than the long DRX cycle. If no short DRX cycle is configured, the UE may follow the long DRX cycle. When configuring the short DRX cycle, the BS may set the duration of the long DRX cycle to be a positive integer multiple of the short DRX cycle. If there is no data activity during the on-duration of the long DRX cycle, the UE may follow the long DRX cycle as if no short DRX cycle is configured. If there is data activity during the on-duration of the long DRX cycle, for example, while drx-onDurationTimer is running, the UE switches to the short DRX cycle and follows the short DRX cycle for a certain period of time (e.g., while drx-ShortCycleTimer is running). Referring to FIG. 11, if there is no data activity during the time that the UE follows the short DRX cycle, for example, if there is no data activity during the period defined by drx-ShortCycleTimer * drx-ShortCycle, the UE switches from short DRX cycles each having the duration by drx-ShortCycleTimer to the long DRX cycle.

FIG. 12 illustrates transmission of SIB1 in a 3GPP-based system. In FIG. 12, $P_{SIB1}$ represents the transmission periodicity or repetition periodicity of SIB1, an SIB1 PDSCH refers to a PDSCH carrying SIB1, and an SIB1 PDCCH represents a PDCCH carrying a DCI format that schedules the SIB1 PDSCH.

According to the current 5G specifications, in FIG. 12, SIB1, which is a part of the minimum system information required for cell access, is transmitted on a DL-SCH with a periodicity of 160 ms or a variable transmission repetition periodicity within 160 ms. The default transmission repetition periodicity of SIB1 is 20 ms, but the actual transmission repetition periodicity depends on the network implementation. For SSB and CORESET multiplexing pattern 1, the transmission repetition period of SIB1 is 20 ms. For SSB and CORESET multiplexing patterns 2/3, the transmission repetition period of SIB1 is the same as the SSBI period.

A PDCCH monitoring occasion on which the UE attempts to decode the SIB1 PDCCH may be determined based on information in the MIB, for example, *pdcch-ConfigSIB1*. For example, during cell search, if the UE determines based on the MIB that a Type0-PDCCH CSS set exists, the UE may determine the number of consecutive RBs and the number of consecutive symbols for the CORESET of the Type0-PDCCH CSS set from *controlResourceSetZero* in pdcch-ConfigSIB1. The UE may also determine PDCCH monitoring occasions from *searchSpaceZero* in pdcch-ConfigSIB1. For example, for an SSB with index i, the system frame number (SFN) of a frame of the related CORESET, $SFN_C$; a first slot including Type-0 monitoring occasion(s) in the frame corresponding to SFNc, slot $n_0$; and a combination of parameter values required to determine the index of the first symbol of the corresponding CORESET in slot $n_0$ may be provided by searchSpaceZero.

The UE may monitor the Type0-PDCCH CSS set in the PDCCH monitoring occasion to detect the SIB1 PDCCH. The UE may determine frequency resource allocation and time resource allocation of the SIB1 PDSCH from DCI carried by the SIB 1 PDCCH. The UE may receive/decode SIB1 based on the frequency resource allocation and time resource allocation.

When the UE has no ongoing data transmissions/receptions, the UE enters RRC_IDLE or RRC_INACTIVE to save power. When DL data for the UE arrives in the network, the network transmits a paging message on a paging occasion (PO) to trigger an RRC Setup procedure and an RRC Connection Resume procedure. The PO refers to a set of PDCCH monitoring occasions and may consist of multiple time slots (e.g., subframes or OFDM symbols). DCI with a CRC scrambled with a P-RNTI may be transmitted on the PO. In multi-beam operations, the UE assumes that the same paging message is repeated in all transmitted beams. The paging message is same for both radio access network (RAN) initiated paging and core network (CN) initiated paging. One paging frame (PF) is one radio frame and may contain one or multiple PO(s) or starting point of a PO. The UE monitors one paging occasion (PO) per DRX cycle. The PF and PO for paging may be determined by predetermined equations. For example, in some implementations, a system frame number (SFN) for the PF may be determined by $(SFN + PF\_offset) \bmod T = (T \operatorname{div} N)*(UE\_ID \bmod N)$, and the index $i\_s$ indicating the index of the PO may be determined by $i\_s = floor(UE\_ID) \bmod Ns$, where T is the DRX cycle of the UE and determined by the shortest of the UE specific DRX value(s) and/or a default DRX value broadcast in system information, N is the number of total paging frames in T, Ns is the number of paging occasions for a PF, PF\_offset is an offset used for PF determination, and UE\_ID is a value determined based on 5G-S-TMSI. The following parameters may be signaled in SIB1: a parameter related to the number of POs per paging frame, Ns; a parameter used to derive the number of total paging frames in T, nAndPaging-FrameOffset; a parameter related to the number of PDCCH monitoring occasions corresponding to SSBs in a PO, nrofPDCCH-MonitoringOccasionsPerSSB-InPO; and the length of a default DRX cycle. The values of N and PF\_offset are derived from the parameter nAndPagingFrameOffset. The PDCCH monitoring occasions for paging are determined based on the following parameters: a parameter indicating the first PDCCH monitoring occasion for paging of each PO of the PF, firstPDCCH-MonitoringOccasionOfPO; and the parameter nrofPDCCH-MonitoringOccasionsPerSSB-InPO. For paging in the initial DL BWP, the parameter firstPDCCH-MonitoringOccasionOfPO may be signaled in SIB1. For paging in a DL BWP other than the initial DL BWP, the parameter firstPDCCH-MonitoringOccasionOfPO may be signaled in the corresponding BWP configuration.

To reduce power consumption, the UE may use a paging early indication (PEI) in the RRC_IDLE and RRC_INACTIVE states. When a PEI configuration is provided in system information, if the UE is in the RRC_IDLE or RRC_INACTIVE state and supports the PEI, the UE may monitor the PEI using PEI parameters in the system information. The UE monitors one PEI per DRX cycle. A PEI occasion (PEI-O) is a set of PDCCH monitoring occasions, which may consist of multiple time slots (e.g., subframes or OFDM symbols) where the PEI is capable of being transmitted. In multi-beam operations, the UE assumes that the same PEI is repeated across all transmitted beams. The time location of a PEI-O for the PO of the UE is determined by a reference point and an offset. The reference point is the start of a reference frame, which is determined by a frame-level offset from the start of a first PF among PFs associated with the PEI-O and is provided by *pei-FrameOffset* in SIB1. The offset is a symbol-level offset from the reference point to the start of a first PDCCH monitoring occasion of the PEI-O, which is provided by *firstPDCCH-MonitoringOccasionOfPEI-O* in SIB1. If a single PEI-O is associated with the POs of two PFs, the two PFs are consecutive PFs calculated by the parameters: PF\_offset, T, Ns, and N. For more detailed information about the PEI, refer to 3GPP TS 38.304 and 3GPP TS 38.213.

Paging DRX is defined as follows: a UE in the RRC_IDLE or RRC_INACTIVE state is required to monitor paging channels during one PO per DRX cycle. The following paging DRX cycles may be configured by the network: i) for core network-initiated paging (CN-initiated paging), a default cycle is broadcasted in system information; ii) for CN-initiated paging, UE-specific cycles may be configured through non-access stratum (NAS) signaling; and iii) for radio access network (RAN)-initiated paging, UE-specific cycles may be configured through RRC signaling. The UE uses the shortest among applicable DRX cycles. For example, a UE in RRC_IDLE may use a shorter one of first two DRX cycles among three DRX cycles, and a UE in RRC_INACTIVE may use the shortest one of the three DRX cycles.

The BS may save energy based on symbol muting when there is no data to transmit. However, common signals/channels, such as an SSB and SIB, are always-on signals/channels that need to always be transmitted, and thus energy saving effects based on symbol muting are difficult to achieve in relevant symbols. In NR, SSBs/SIBs are transmitted through beam sweeping with a specific subcarrier spacing and multiple beams for each frequency range (FR), and as the FR increases, the number of beams also increases. Therefore, the amount of time resources used for transmitting common signals/channels, such as an SSB and SIB, in FR2 may be relatively higher compared to FR1, which may result in a higher proportion of energy consumption for the BS.

To reduce the energy consumed for the BS by the transmission of always-on signals/channels, such as an SSB and SIB, the periodicities of the SSB and SIB may be set longer. However, in this case, the time required for the UE to access a cell may increase, and issues such as a legacy UE failing to properly discover the cell may arise. Therefore, in scenarios where the UE may receive common signals/channels, such as an SSB and SIB, on a specific carrier, the BS may transmit the common signals/channels such as the SSB and SIB with a significantly long periodicity or not transmit the signals at all on other carriers. The BS may transmit only minimal signals (e.g., discovery signal) necessary for cell discovery, thereby reducing energy consumption caused by the transmission of the common signals/channels such as the SSB and SIB. When the UE transmits a specific signal (e.g., wake-up signal (WUS)) to connect to the carrier, the BS may transmit the SSB, SIB1, and so on to enable the connection. In the case of a UE that has both an anchor component carrier (CC) where the SSB/SIB is transmitted periodically and a non-anchor CC where the SSB/SIB is transmitted with a significantly long periodicity or only discovery signals are transmitted, the anchor CC may transmit system information (SI) on the non-anchor CC. Based on assistance information, if the UE needs to connect to the non-anchor CC, the UE may receive the SI in an on-demand way through signals such as a WUS. In this case, the BS may save energy by skipping SSB/SIB transmission continuously on the non-anchor CC.

In the present disclosure, when the BS operates in a network energy saving (NES) mode to save energy, it means that the BS configures multiple OFF period(s) (DTX period(s) of the BS) where the transmission of a specific DL signal is turned off for a specific time period. By dynamically indicating one of the OFF periods, the BS may indicate that the DL signal may not be transmitted during the predefined time period, thereby reducing the power consumption of both the BS and UE. Additionally, in the time domain as well as in the frequency domain, BWP switching, dynamic resource block (RB) adaptation, and in the spatial domain, for example, when a specific reception antenna port of the BS is semi-statically or dynamically turned off, the NES mode may refer to an operation mode where the BS does not perform transmission and/or reception on the antenna port to achieve power consumption saving effects for both the BS and UE.

**<Method 1> A method where the BS informs the UE that common signals/channels such as SIB1 are to be transmitted on-demand via a specific SSB or PBCH and a method where the UE requests transmission of common signals/channels such as SIB1 on-demand via a UL WUS**

> **(1-1) While transmitting a specific SSB, the BS may notify that on-demand SIB1 is in operation through a specific bit in the PBCH, a specific PSS and/or SSS sequence, or a PBCH DMRS sequence.**
> **(1-2) When the BS is not transmitting SIB1 but continues to transmit SIB1 scheduling information (*controlResourceSetZero* and *searchSpaceZero* of *pdcch-ConfigSIB1*) through an MIB, some of the reserved states of *controlResourceSetZero* or *searchSpaceZero* may be used to indicate that on-demand SIB1 is in operation.**

>> **i. In some implementations, after the UE transmits a RACH for an SIB1 request, the BS transmits an ACK for the SIB1 request through CORESET0. Upon successfully receiving the ACK, the UE may monitor an SI-RNTI.**
>> **ii. In some implementations, SIB1 transmitted by the BS after receiving the SIB1 request from the UE may refer to either SIB1 linked to a specific SSB index corresponding to the RACH transmitted by the UE or SIB1 linked to all transmitted SSB indices.**
>> **iii. In some implementations, after the RACH transmission, the UE may receive the ACK through predefined CORESET0/SS0 (i.e., search space set index 0). Alternatively, without receiving the ACK, the UE may check valid *controlResourceSetZero* or *searchSpaceZero* information before receiving SIB1.**

> **(1-3) While transmitting a specific SSB, the BS may notify that on-demand SIB1 is in operation through specific information in the SSB or via ssb-SubcarrierOffset $k_{SSB}$ in the MIB. The BS may transmit SIB1 based on the request from the UE. In this case, the SSB may not include a configuration for CRESET#0/Type0-PDCCH CSS set.**

>> **i. In some implementations, if the BS indicates a reserved state for specific information in the SSB (the BS may use a part of the SSB PBCH payload, e.g., a reserved 1 bit), the UE may interpret that the BS operates SIB1 on-demand. Then, the UE may request the BS to transmit SIB1 through preconfigured or predefined PRCH transmission in the corresponding state.**
>> **ii. In some implementations, if the BS indicates the reserved state through a specific $k_{SSB}$ value, an advanced UE may interpret that the BS operates SIB1 on-demand and transmit a RACH for requesting SIB1.**
>> **iii. In some implementations, if CORESET0/SS0 information does not need to be transmitted for on-demand SIB1 reception, for (predefined) cases with no information (for no information case), the advanced UE may interpret that the BS operates SIB1 on-demand and perform operations such as transmitting the RACH for the SIB1 request.**

**However, the advanced UE refers to a UE that has the ability to interpret information from the BS that informs that the cell is operating in the NES mode and is capable of operating according to the NES operation indication/configuration of the BS. UL WUS resources that the UE uses to request SIB1 transmission from the BS are defined in standard documents, or resources configured in an SSB (or cell-defining SSB (CD-SSB)) may be used for WUS transmission. In this case, a specific UL signal/channel that is predefined or preconfigured, such as a RACH, may be used for the UL WUS. The methods and/or procedures according to the present disclosure may**

**be applied when the BS transmits a CD-SSB but operates SIB1 on-demand, which means that SIB1 is not actually transmitted. That is, the methods and/or procedures may be applied to scenarios where an idle/inactive UE transmits a UL WUS (e.g., RACH) to request SIB1.**

Hereinafter, details of the methods described in (1-1) to (1-3) will be explained.

There are two types of SSBs within a carrier: cell-defining SSB (CD-SSB) and non-CD-SSB (NCD-SSB). According to 3GPP TS 38.300 Section 5.2.4, multiple SSBs may be transmitted within the frequency range of the carrier. The physical cell identifiers (PCIs) of multiple SSBs transmitted at different frequency locations do not need to be unique. In other words, different SSBs in the frequency domain may have different PCIs. However, when an SSB is associated with RMSI, the SSB is referred to as a CD-SSB. The Pcell is always associated with the CD-SSB that is within a synchronization raster. The CD-SSB is an SSB associated with SIB1 that has the NR cell global identifier (NCGI) of a cell and is always in the initial BWP. The UE may determine the location of the CD-SSB through cell search in the synchronization raster. On the other hand, the NCD-SSB is not associated with SIB1 and may be used in EN-DC. The UE may determine the location of the NCD-SSB through an RRC reconfiguration, and one or more types of SSBs may exist within the same BWP.

Specifically, the BS may need to transmit a minimal amount of SSBs to allow the UE to discover and connect to a cell even if the BS transmits no SIB for energy saving. Additionally, the BS may inform the UE that the BS does not transmit an SIB for network energy saving, but if the UE transmits a UL WUS, SIB1 may be transmitted on-demand. The BS may transmit this information through a specific bit in a PBCH payload, a specific PSS and/or SSS sequence, or a DMRS sequence in a PBCH. For example, to indicate that SIB1 may be transmitted on-demand, the BS may set some or all of the 24 bits of an MIB within the PBCH payload, which consists of a total of 56 bits, to '1' or '0' based on a specific bit configuration, which is pre-agreed or defined in the standard. Alternatively, the BS may configure all or part of the 8 bits of a timing-related PBCH payload using specific bits that are pre-agreed or defined in the standard. Alternatively, the BS may configure bits that make up all or some of the fields related to an SCS, RMSI CORSET/search space, and initial active DL BWP using specific bits that are pre-agreed or defined in the standard. Alternatively, the BS may also indicate that the BS is not currently transmitting SIB1 but may transmit SIB1 on-demand through a specific PSS sequence, a specific SSS sequence, or a combination of both (or through a specific PBCH DMRS sequence), which are predefined or agreed upon in the standard.

Next, even when the BS operates in the NES mode and does not transmit SIB1, if the BS transmits scheduling information on SIB1 (*controlResourceSetZero* and *searchSpaceZero* of *pdcch-ConfigSIB1*), the BS may utilize some of the reserved states of *controlResourceSetZero* or *searchSpaceZero* to indicate that the BS is not currently transmitting SIB1, but that SIB1 may be transmitted on-demand. The UE may transmit a UL WUS using resources defined in the standard or configured in a (CD-)SSB to request SIB1 from the BS. In this case, the UL WUS may use pre-agreed specific UL signals/channels, such as a RACH. If the UE transmits the RACH for the SIB1 request, the UE may check an ACK for the SIB1 request transmitted by the BS through CORESET0 and then perform SI-RNTI monitoring. SIB1 transmitted by the BS after receiving the SIB1 request from the UE may refer to SIB1 linked to a specific SSB index corresponding to the RACH transmitted by the UE, or SIB1 may refer to SIB 1 linked to all transmitted SSB indices. Alternatively, after the UE transmits a WUS (e.g., RACH), the UE may receive an ACK through predefined CORESET0/SS0 (i.e., search space set index 0). Alternatively, without receiving an ACK, the UE may check valid *controlResourceSetZero* or *searchSpaceZero* information before receiving SIB1.

While transmitting a specific SSB, the BS may indicate that the BS is operating on-demand SIB1 through specific information in the SSB and through a reserved state. In this case, the SSB may not have a configuration for CORESET#0/Type0-PDCCH CSS set. If the reserved state is indicated, the UE may determine whether the cell is operating on-demand SIB1 depending on the type/capability of the UE (e.g., legacy UE or advanced UE supporting Rel-18 NES). Then, the UE may either request SIB 1 transmission or perform a procedure to find another cell transmitting a CD-SSB. Specific information within a specific SSB may be indicated by a reserved state. To this end, a part of the SSB PBCH payload, for example, a reserved 1 bit may be used. The legacy UE may interpret the information as an NCD-SSB and move to another cell that transmits a CD-SSB. However, the advanced UE supporting Rel-18 NES may interpret the information as a state in which it is an actually CD-SSB, but SIB1 is being operated on-demand. Then, the advanced UE may request SIB1 transmission from the BS through a predefined or preconfigured RACH transmission in the corresponding state.

Next, even when the BS operates in the NES mode and does not transmit SIB1, if the BS transmits scheduling information on SIB1 (*controlResourceSetZero* and *searchSpaceZero* of *pdcch-ConfigSIB1*), the BS may utilize some of the reserved states of *controlResourceSetZero* or *searchSpaceZero* to indicate that the BS is not currently transmitting SIB1, but that SIB1 may be transmitted on-demand. The UE may transmit a UL WUS using resources defined in the standard or configured in a (CD-)SSB to request SIB1 from the BS. In this case, the UL WUS may use pre-agreed specific UL signals/channels, such as a RACH. If the UE transmits the RACH for the SIB1 request, the UE may check an ACK for the SIB1 request transmitted by the BS through CORESET0 and then perform SI-RNTI monitoring. SIB1 transmitted by the BS after receiving the SIB1 request from the UE may refer to SIB1 linked to a specific SSB index corresponding to the RACH transmitted by the UE, or SIB1 may refer to SIB 1 linked to all transmitted SSB indices. Alternatively, after the UE transmits a WUS (e.g., RACH), the UE may receive an ACK through predefined CORESET0/SS0 (i.e., search space set index 0).

Alternatively, without receiving an ACK, the UE may check valid *controlResourceSetZero* or *searchSpaceZero* information before receiving SIB1.

While transmitting a specific SSB, the BS may indicate that the BS is operating on-demand SIB1 through specific information in the SSB and through a reserved state. In this case, the SSB may not have a configuration for CORESET#0/Type0-PDCCH CSS set. If the reserved state is indicated, the UE may determine whether the cell is operating on-demand SIB1 depending on the type/capability of the UE (e.g., legacy UE or advanced UE supporting Rel-18 NES). Then, the UE may either request SIB 1 transmission or perform a procedure to find another cell transmitting a CD-SSB. Specific information within a specific SSB may be indicated by a reserved state. To this end, a part of the SSB PBCH payload, for example, a reserved 1 bit may be used. The legacy UE may interpret the information as an NCD-SSB and move to another cell that transmits a CD-SSB. However, the advanced UE supporting Rel-18 NES may interpret the information as a state in which it is an actually CD-SSB, but SIB1 is being operated on-demand. Then, the advanced UE may request SIB1 transmission from the BS through a predefined or preconfigured RACH transmission in the corresponding state.

The UE determines the number of consecutive RBs and the number of consecutive symbols for the CORESET of a Type0-PDCCH CSS set from *controlResourceSetZero* of *pdcch-ConfigSIB1*. Additionally, the UE determines PDCCH monitoring occasions from *searchSpaceZero* of *pdcch-ConfigSIB1* in the MIB. In some implementations of the present disclosure, the BS may inform the UE whether on-demand SIB1 is in operation by setting some of the reserved bit values or reserved states in *controlResourceSetZero*, *searchSpaceZero*, or *ssb-SubcarrierOffset* of *pdcch-ConfigSIB1* to specific values.

Referring to Tables 13-16 or 13-17 in Section 13 of 3GPP TS 38.213, when the BS indicates a reserved state through a $k_{SSB}$ value of 30 in FR1 or a $k_{SSB}$ value of 14 in FR2, the legacy UE may interpret the reserved state as an NCD-SSB, but the Rel-18 UE may interpret the reserved state as a CD-SSB and that SIB1 is being operated on-demand and then transmit a RACH to request SIB1.

Table 8 below is from Table 13-16 in 3GPP TS 38.213 and shows mapping of a combination of $k_{SSB}$ and *controlResourceSetZero* and *searchSpaceZero* of *pdcch-ConfigSIB1* to $N^{Offset}_{GSCN}$ for FR1.

Table 8

| $k_{SSB}$ | *16×controlResourceSetZero +searchSpaceZero* | $N^{Offset}_{GSCN}$ |
|---|---|---|
| 24 | 0, 1, ..., 255 | 1, 2, ..., 256 |
| 25 | 0, 1, ..., 255 | 257, 258, ..., 512 |
| 26 | 0, 1, ..., 255 | 513, 514, ...., 768 |
| 27 | 0, 1, ..., 255 | -1, -2, ..., -256 |
| 28 | 0, 1, ..., 255 | -257, -258, ..., -512 |
| 29 | 0, 1, ..., 255 | -513, -514, ...., -768 |
| 30 | 0, 1, ..., 255 | Reserved, Reserved, ..., Reserved |

Table 9 below is from Table 13-17 in TS 38.213 and shows mapping of a combination of $k_{SSB}$ and the *controlResourceSetZero* and *searchSpaceZero* of *pdcch-ConfigSIB1* to $N^{Offset}_{GSCN}$ for FR2.

Table 9

| $k_{SSB}$ | *16×controlResourceSetZero +searchSpaceZero* | $N^{Offset}_{GSCN}$ |
|---|---|---|
| 12 | 0, 1, ..., 255 | 1, 2, ..., 256 |
| 13 | 0, 1, ..., 255 | -1, -2, ..., -256 |
| 14 | 0, 1, ..., 255 | Reserved, Reserved, ..., Reserved |

Referring to 3GPP TS 38.213, if the UE detects an SS/PBCH block and determines that there is no CORESET for a Type0-PDCCH CSS set, and if $k_{SSB}$ = 31 for FR1 or $k_{SSB}$ = 15 for FR2, the UE determines that there is no SS/PBCH block with the Type0-PDCCH CSS set within a GSCN range of $[N^{Reference}_{GSCN}-N^{Start}_{GSCN}, N^{Reference}_{GSCN}+ N^{End}_{GSCN}]$. $N^{Start}_{GSCN}$ and $N^{End}_{GSCN}$ are determined by *controlResourceSetZero* and *searchSpaceZero* of *pdcch-ConfigSIB1.* When the GSCN range is $[N^{Reference}_{GSCN}, N^{Reference}_{GSCN}]$, the UE determines that there is no information about a second SS/PBCH block with the CORESET for the Type0-PDCCH CSS set in the detected SS/PBCH block.

Referring to 3GPP TS 38.213, if CORESET0/SS0 (i.e., search space set index 0) information does not need to be provided for on-demand SIB1 reception (e.g., predefined), for cases with no information (no information case), the Rel-18 UE may determine that the BS is operating on-demand SIB1 and transmit a UL WUS (e.g., RACH) to request SIB1.

**<Method 2> A method of performing UL WUS detection only on sparse RACH occasion (RO) resources (which may be related to a low-power WUS with significantly low received signal power) and turning off other reception when the BS operates in the NES mode**

> **(2-1) Information about a carrier/cell operating in the NES mode for a specific carrier/cell (e.g., DL/UL BWP, RACH) may be provided.**
> **(2-2) The (RO) resources for UL WUS transmission may be configured more sparsely in the time domain compared to dense ROs for full SIB-based RACH transmission.**
> **(2-3) If the UL WUS from the UE is detected on a carrier/cell operating in the NES mode, full RACH reception may start based on SSB transmission and SI.**

However, information about UL WUS resources (e.g., RACH) for requesting initial access and transmission of common signals/channels such as an SSB/SIB1 for a carrier/cell operating in the NES mode may be provided by the carrier/cell operating in the NES mode and/or other neighboring carriers/cells (for example, through cell-specific RRC signaling such as SIB1). The information may include both a sparse RACH configuration for waking up the BS operating in the NES mode and a legacy RACH configuration for the general RACH procedure. Additionally, the methods and/or procedures according to the present disclosure may be applied to a scenario where a connected mode UE transmits a WUS to a target cell when the target cell is operating in the NES mode during a conditional handover (HO) situation, or a scenario for conditional addition of a secondary cell group (SCG).

Hereinafter, details of the methods described in (2-1) to (2-3) will be explained.

While the BS operates in the NES mode where the BS does not transmit or only transmits common signals/channels such as an MIB and/or SIB with a significantly long periodicity for energy saving, only if the UE sends a request through a pre-agreed or preconfigured UL WUS (e.g., RACH), the BS may perform MIB and/or SIB1 transmission and the RACH procedure for energy saving.

The UE may receive information regarding a carrier/cell operating in the NES mode (e.g., DL/UL BWP, RACH), transmit a UL WUS through the carrier/cell operating in the NES mode to request an SSB/SIB1, and perform a procedure for connecting to the cell. In this case, information on UL WUS resources (e.g., SIB1) provided by a specific carrier/cell may include both a sparse RACH configuration for waking up the carrier/cell operating in the NES mode and a legacy RACH configuration for the general RACH procedure. The carrier/cell operating in the NES mode may only perform detection of the UL WUS from the UE and turn off other receptions. When the UE transmits the UL WUS, the target cell may receive the UL WUS and only then start full SSB transmission and full RACH reception based on SI of the cell, thereby saving energy.

Therefore, the (RO) resources for UL WUS transmission may be configured more sparsely in the time domain compared to dense ROs used for full SIB-based RACH transmission, in order to save energy for the BS. After transmitting the UL WUS, the UE may start full RACH reception based on the SSB and SI transmitted from the carrier/cell operating in the NES mode. Alternatively, without receiving a separate ACK from the BS, the UE may attempt RACH transmission based on SIB1 (configured by a source cell or transmitted by the target cell) and proceed with the connection procedure.

The methods and/or procedures according to the present disclosure may be applied to a scenario where a connected mode UE is configured a conditional HO to the target cell operating in the NES mode or a scenario where a cell operating in the NES mode (e.g., a PScell and/or an Scell belonging to a SCG) conditionally is added to the SCG. For example, the methods and/or procedures according to the present disclosure may be applied to a scenario where a source cell near a cell operating in the NES mode provides a conditional HO command to instruct a connected mode UE to transmit a UL WUS (e.g., RACH) to a target cell operating in the NES mode, along with a sparse RACH configuration as UL WUS resources for waking up the target cell if specific conditions are met (e.g., if RSRP is above or below a preconfigured threshold). The UE may transmit the UL WUS toward the target cell (on configured resources) and perform the existing HO procedure if the specific conditions are met. As another example, the methods and/or procedures according to the present disclosure may be applied to a scenario where, for dual connectivity in a cell belonging to an MCG, a cell operating in the NES mode configures conditional SCG addition along with WUS resources, and, if preconfigured conditions are met (e.g., if RSRP is above or below a preconfigured threshold), the cell operating in the NES mode transmits a WUS to perform SCG addition. When the specific conditions are met, the UE may transmit the UL WUS toward the cell belonging to the SCG (e.g., PScell) on configured resources and perform the existing SCG addition procedure.

**<Method 3> A method by which while performing DL reception (RS measurement) on a configured SCell, the UE transmits a WUS for activating the SCell on WUS/RACH resources provided by a PCell when specific conditions are met (e.g., if RSRP is above or below a preconfigured threshold)**

When the BS configures an SCell but the SCell is not in the active state, the corresponding cell operates in the NES mode and transmits only minimal RSs without transmitting common signals/channels such as an SSB/SI. Alternatively, the cell transmits the common signals/channels at a significantly long periodicity. Upon receiving a WUS/RACH transmitted by the UE, the cell may switch to the normal mode (non-NES mode). While performing DL reception on the configured SCell (RS measurement), the UE transmits the WUS for SCell activation on the WUS/RACH resources provided by the PCell when the specific conditions are met (e.g., if RSRP is above or below the preconfigured threshold). In this case, the UL WUS resources for requesting SIB1 transmission from the BS may be defined in standard documents. Alternatively, the resources configured by the PCell may be used to transmit the WUS. Specific pre-agreed or configured UL signals/channels such as a RACH may be used as the UL WUS. The methods and/or procedures according to the present disclosure may be applied to scenarios where when the BS reduces SSB transmission for the SCell to save energy (e.g., by configuring a longer periodicity) or turns off SSB transmission entirely, the UE activates the SCell through the WUS.

**<Method 4> A method by which for network energy saving, the BS turns off or reduces SSB/SI/paging/RACH transmission/reception in time periods outside the on duration (or active time) of the UE configured with C-DRX (e.g., by configuring a significantly long periodicity)**

> **(4-1) According to some implementations of the present disclosure, when a UE that intends to transmit/receive an SSB/SI/paging/RACH transmits a UL WUS, the transmission/reception opportunities for specific signals/channels may increase.**

>> **i. The specific signals/channels may be preconfigured in association with each UL WUS (resource), and a single UL WUS may increase the transmission/reception opportunities for all or some of the signals/channels.**
**The BS may transmit a response to the received UL WUS. The BS may increase the transmission opportunities at a specific time point when the transmission of the specific signals/channels starts or during a specific time period through pre-agreed or group-common (GC) DCI.**
>> **ii. In some implementations, when an SSB/TRS is transmitted only during the on duration (or active time), the BS may configure a period to guarantee the transmission of the SSB or TRS for time/frequency synchronization (synchronization raster) before the on duration (or active time), in order to mitigate the RS shortage issue.**
>> **iii. In some implementations, since SSB or RS transmission is restricted outside the on duration (or active time) period, the BS may concentrate RSs required for periodic measurement within the on duration (or active time) period and relax measurement requirements.**
>> **iv. In some implementations, in addition to a UE-specific on duration (or active time), the BS may configure a UE-common on duration (or active time) for RS reception or indicate the UE-common on duration (or active time) or window for RS reception through GC-DCI.**

**The above method may be applied to scenarios where when the BS configures DRX to save network energy, and when the BS turns off SSB/SI/paging/RACH transmission/reception or drastically reduces the density thereof outside the on duration (or active time), the UE transmits a WUS. In this case, the active time refers to the union of a time period during which the on duration timer is running, a time period during which the inactive timer is running during PDCCH reception, or a time period during the UE needs to remain in the active state because the retransmission timer is running when the UE is configured and operates with C-DRX.**
Hereinafter, details of the methods described in (4-1) will be explained.
After the UE establishes an initial connection with the BS and enters the connected mode, the UE needs to continuously monitor a PDCCH for each configured search space (SS) to check if there is any scheduled transmission for the UE. However, if such scheduling is not always present, the battery of the UE may be quickly consumed due to the unnecessary PDCCH monitoring. Therefore, the BS may configure C-DRX by configuring a time period (on duration) during which the UE needs to perform PDCCH monitoring and an off duration (OFF duration) during which PDCCH monitoring is not required, thereby achieving power saving for the UE. The UE performs PDCCH monitoring during periodic on durations to check if there is any DL/UL to receive/transmit. Upon receiving the PDCCH, the UE performs DL reception or UL transmission based on the instructions. For UL, regardless of C-DRX, if there is data to transmit in a UL buffer, the UE may wake up from the sleep mode and transmit an SR. In the idle mode, the UE periodically performs paging monitoring and, if the UE is not the target UE, the UE may return to the sleep mode and operate in idle mode DRX (I-DRX). Here, when it is said that the UE operates in the sleep mode, it means that the UE may operate in the sleep mode "regardless of the active time determined by C-DRX" or "during time periods outside the active time determined by C-DRX." In C-DRX operation, the repetition of a time period configured with the on duration and off duration is referred to as a DRX cycle. The length of the DRX cycle is defined as the period from the start of the on duration to the next on duration, and there are both long and short DRX cycles. If the DRX cycle length becomes longer, the BS needs to wait until the next on duration of the UE if there is a PDSCH to transmit immediately after the end of the current on duration of the UE, which may increase latency. From the perspective of the BS, since the UE does not transmit P-CSI or an SRS during the off duration, the BS may allocate the resources to other UEs, thereby improving resource utilization. Additionally, the BS may switch to the energy saving mode during the off duration of the UE to save power.

As explained above, if the time period when the UE is in the sleep state is maximized for use as the DTX period of the BS (i.e., operation in the NES mode) in consideration of the C-DRX operation of the UE, energy saving effects may be expected. During the time periods outside the on duration (or active time) of the UE configured with C-DRX, the BS may turn off or drastically reduce SSB/SI/paging/RACH transmission/reception (for example, by configuring a significantly long periodicity). In this case, to perform measurements through an SSB, obtain SI, or transmit a RACH, the UE may transmit a UL WUS to increase the transmission/reception opportunities for specific signals/channels.

In this case, the specific signals/channels may be preconfigured in association with each UL WUS (resource), and a single UL WUS may increase the transmission/reception opportunities for all or some of the signals/channels. For example, when a RACH is used as the UL WUS, a specific RACH index (e.g., RO and/or preamble index) is associated with an SSB, and another specific RACH index is associated with SI. Based on the RACH index of the UL WUS transmitted by the UE, the transmission/reception opportunities of the associated signals/channels may be increased. Alternatively, when a specific WUS is transmitted, the transmission/reception of SSB/SI/paging/RACH, which is turned off or reduced, may be restored to normal operation (i.e., operating in the non-NES mode). For example, based on preconfigured information, the UE requests an increase in the transmission opportunities of the specific common signals/channels using the RACH index of the UL WUS. After transmitting the UL WUS, the UE may expect signal reception with a period of Y (<X) ms, instead of the original X ms period.

The BS may transmit a response to the received UL WUS. The BS may increase the transmission opportunities at a specific time point when the transmission of the specific signals/channels starts or during a specific time period through pre-agreed or group-common (GC) DCI. For example, if the UE is configured with a specific RACH index associated with SIB1 and desires to receive SIB1 more frequently than the current periodicity during a specific time period, the UE may transmit the corresponding RACH index in the WUS. Then, the UE may receive a response via the RAR from the BS. The UE may expect to receive SIB1 at a specific time point or during a specific time period (e.g., 2 slots later) indicated through pre-agreed (or GC) DCI.

Additionally, when an SSB/TRS is transmitted only during the on duration (or active time), the BS may configure a period to guarantee the transmission of the SSB or TRS for time/frequency synchronization (synchronization raster) before the on duration (or active time), in order to mitigate the RS shortage issue. The UE may receive an additional SSB or TRS in a configured period outside the on duration (or active time) to supplement insufficient RSs. Since SSB or RS transmission is restricted outside the on duration (or active time) period, the BS may concentrate RSs required for periodic measurement within the on duration (or active time) period and relax measurement requirements. In addition to a UE-specific on duration (or active time), the BS may configure a UE-common on duration (or active time) for RS reception or indicate the UE-common on duration (or active time) or window for RS reception through GC-DCI.

**<Method 5> A method of assigning a specific UL WUS to each cell to complement load-based cell activation**

> (5-1) When a load occurs for each UE tracking area, a cells to be activated may be preconfigured.
> (5-2) The BS may assign a specific UL WUS targeting a cell to be activated based on assistance information periodically transmitted by the UE.
> (5-3) Multiple UL WUSs (e.g., different sequences) may be preconfigured for the UE, and if a load is generated, a specific cell may be targeted for activation.

Hereinafter, details of the methods described in (5-1) to (5-3) will be explained.

The BS may add a capacity booster cell (Cell B) in addition to a PCell (Cell A) to enhance the throughput and capacity of the UE. In this case, the capacity booster cell (Cell B) is located within the coverage of Cell A and may be an SCell with a higher FR than Cell A. Since the UE does not always require high throughput, Cell B may operate in the NES mode and is activated for capacity boosting when the UE requires high throughput or when a load occurs, thereby allowing Cell B to transmit data to the UE. However, since the BS is incapable of determining whether the UE having the load among UEs within the coverage area of Cell A is within the coverage area of Cell B, activating Cell B based on the load may be inefficient. For example, if the load of a UE outside the coverage area of Cell B causes Cell B to wake up from the NES mode (sleep mode), it may be seen that waking up was unnecessary, resulting in wasted energy.

To address the issues with load-based cell activation, the UE may transmit a UL WUS to activate Cell B when capacity boosting is required. Additionally, considering the coverage of Cell B, the UE may be preconfigured by Cell A with a cell to be activated when a load occurs in each UE tracking area.

The BS may assign a specific UL WUS targeting a cell to be activated (based on assistance information periodically transmitted by the UE). When the BS targets a specific cell for activation (if a load occurs) by preconfiguring a different UL WUS (e.g., different time/frequency/sequence resource) for each cell for the UE, the UE may perform the activation of the cell by transmitting the UL WUS configured for the cell (here, activation may refer to the activation of an SCell or requesting the transmission of an SSB and/or SI from the corresponding cell).

In some embodiments of the present disclosure, a cell may be extended or replaced by a carrier, frequency, or physical cell ID, etc. For example, when UL WUS #1 is configured for frequency #A and UL WUS #2 is configured for frequency #B, the UE may transmit UL WUS #1 when requesting the activation of frequency #A.

**<Method 6> A method of adjusting the power of a UE UL WUS based on the power level of a DL discovery signal received by the UE, depending on the location of the UE within a cell**

**> (6-1) If the UE transmits a UL WUS to a specific cell based on received RS power but does not receive a response, the UE may perform power ramping on the UL WUS and retransmit the UL WUS.**

When the UE transmits a UL WUS to request common signals/channels such as an SIB from the BS or to perform SCell activation, if the power of the UL WUS is too low, the BS may not be able to receive the UL WUS properly. On the other hand, if the power of the UL WUS is too high, it may not be efficient in terms of interference or energy consumption for the UE. Therefore, in the methods and/or procedures according to the present disclosure, the power of the UL WUS may be appropriately adjusted by considering the distance between the UE and the BS.

As one method, the UE may adjust the power of the UL WUS based on the power level of a DL signal (e.g., SSB, TRS, discovery signal) the UE receives, depending on the location thereof within a cell. If the UE transmits a WUS to a specific cell based on received RS power but does not receive a response, the UE may perform power ramping up on the UL WUS and retransmit the UL WUS.

Specifically, when the BS is not transmitting common signals/channels such as an SSB/SIB1 for energy saving, the UE may not receive an SSB and thus may not determine SSB power. As a result, path-loss (PL) estimation for WUS transmission may not be possible. To address this, the BS may predefine the SSB power to a fixed value (e.g., the minimum or maximum value of a configurable SSB power range) or provide the SSB power through a specific field or a combination of fields in an MIB, which allows the UE to perform a power configuration for WUS transmission based on the information. Additionally, if the UE does not receive a response (e.g., RAR) from the BS after transmitting a WUS, the UE may progressively ramp up the power of the WUS by a predefined step size. If the UE reaches the maximum power (max power) or if the number of WUS retransmissions exceeds X (which is predefined, MIB-signaled, or RRC-signaled) due to no response, the UE may either be barred from the cell (for a certain period of time) or perform cell (re)selection.

In the methods and/or procedures according to the present disclosure, a C-DRX configuration for network energy saving by the BS may be the same as existing UE C-DRX/I-DRX, or the C-DRX configuration may refer to a time-domain ON/OFF pattern for multiple DL/UL signals and channels, which is dynamically indicated through L1 signaling (e.g., GC-DCI) or L2 signaling (e.g., MAC-CE). In other words, the DRX configuration (or cell-specific DRX configuration) for network energy saving (NES) refers to a (cell-specific) DTX/DRX pattern or active/inactive pattern where a time period during which the BS minimizes or completely turns off transmission/reception for a time period, which is preconfigured or pre-agreed (e.g., in standard documents), for energy saving and a time period during which the BS performs normal operations are repeated periodically. More specifically, as an example of the DRX configuration for NES purposes, the UE may not perform PDCCH monitoring during the active time within a DRX cycle. Additionally, during time periods outside the active time, the UE may skip reception of common signals/channels such as an SSB/SIB1 or may receive the common signals/channels only at a significantly long periodicity. Additionally, even if signal(s)/channel(s) such as a PDCCH/PDSCH/CSI-RS/PRS/PUCCH/PUSCH/SRS are configured to be repeatedly transmitted/received during the time periods outside the active time, transmission may not be performed on resources for the signal(s)/channel(s). Additionally, when cell-specific DTX/DRX is configured or applied, the NES mode/state may be defined. When the NES mode/state is configured or indicated, during a specific time period operating in the NES mode, the transmission/reception of some or all DL/UL signals may be turned off, the amount of frequency resources used for transmission/reception may be reduced, the number of antenna ports used for transmission may be decreased, or the transmission power may be lowered, thereby saving energy. Additionally, a BWP for NES purposes refers to a specific BWP that switches when the ON state for the NES mode (NES mode = ON) is indicated. The BWP may refer to a BWP that consists of a small number of RBs, which represents a minimal amount of frequency resources (BW) among BWPs configured for the UE. If the BS operates in the non-NES mode (i.e., when the OFF state for the NES mode (NES mode = OFF) is indicated/configured to UEs within the cell), DL/UL signal transmission/reception similar to normal BS operations may be expected.

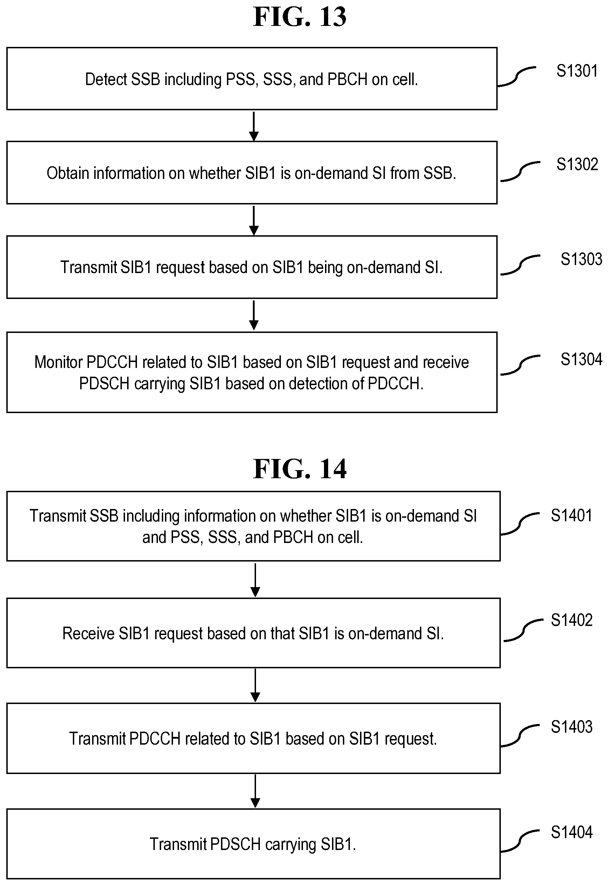

FIG. 13 illustrates a DL signal reception flow in a UE according to some embodiments of the present disclosure.

The UE may detect an SSB including a PSS, an SSS, and a PBCH on a cell (S1301). The UE may obtain information on whether SIB1 is on-demand SI from the SSB (S1302). Based on that SIB1 is the on-demand SI, the UE may transmit an SIB 1 request (S1303). The UE may monitor a PDCCH related to SIB1 based on the SIB1 request, and the UE may receive a PDSCH carrying SIB1 based on detection of the PDCCH (S1304).

FIG. 14 illustrates a DL signal transmission flow in a BS according to some embodiments of the present disclosure.

The BS may transmit an SSB, which includes information on whether SIB1 is on-demand SI, along with a PSS, an SSS, and a PBCH, on a cell (S1401). Based on that SIB1 is the on-demand SI, the BS may receive an SIB1 request (S1402). The BS may transmit a PDCCH related to SIB1 based on the SIB1 request (S1403). The BS may transmit a PDSCH carrying SIB1 (S1404).

To receive DL signals, the UE may perform operations according to some embodiments of the present disclosure. The UE may include: at least one transceiver; at least one processor; and at least one computer memory operably connected to the at least one processor and storing instructions that, when executed, cause the at least one processor to perform the operations according to some embodiments of the present disclosure. A processing device for the UE may include: at least one processor; and at least one computer memory operably connected to the at least one processor and storing instructions that, when executed, cause the at least one processor to perform the operations according to some embodiments of the present disclosure. A computer-readable (non-volatile) storage medium may store at least one program including instructions that, when executed by at least one processor, cause the at least one processor to perform the operations according to some embodiments of the present disclosure. A computer program or computer program product may be recorded on at least one computer-readable (non-volatile) storage medium and may include instructions that, when executed, cause at least one processor to perform the operations according to some embodiments of the present disclosure.

For the UE, the processing device, the computer-readable (non-volatile) storage medium, and/or the computer program product, the operations may include: detecting an SSB on a cell, wherein the SSB includes a PSS, an SSS, and a PBCH; obtaining information regarding whether an SIB1 is on-demand SI from the SSB; transmitting an SIB1 request based on the SIB1 being the on-demand SI; monitoring a PDCCH related to the SIB1 based on the SIB1 request; and receiving a PDSCH carrying the SIB 1 based on detection of the PDCCH.

In some implementations of the present disclosure, the information regarding whether the SIB1 is the on-demand SI may be obtained based on at least one of a specific bit in the PBCH, a synchronization signal sequence, or a DMRS sequence for the PBCH.

In some implementations of the present disclosure, the information regarding whether the SIB1 is the on-demand SI may be obtained based on an SIB1-related PDCCH configuration field in an MIB carried by the PBCH.

In some implementations of the present disclosure, the operations may include: based on the SIB1-related PDCCH configuration field having a predetermined value, determining whether the SIB1 is the on-demand SI; and based on a determination that the SIB1 is the on-demand SI, transmitting the SIB1 request.

In some implementations of the present disclosure, the information regarding whether the SIB1 is the on-demand SI may be obtained based on an SSB subcarrier offset field in an MIB carried by the PBCH.

In some implementations of the present disclosure, the operations may include, based on the SSB subcarrier offset field in the MIB having a predetermined value, determining whether the SIB1 is the on-demand SI.

The operations may include, based on a determination that the SIB1 is the on-demand SI, transmitting the SIB1 request.

In some implementations of the present disclosure, transmitting the SIB1 request may include transmitting a RACH related to the SSB, and the SIB1 may be related to a predetermined SSB index corresponding to the RACH.

In some implementations of the present disclosure, transmitting the SIB1 request may include transmitting a RACH related to the SSB, and the SIB1 may be related to all transmitted SSB indices.

To transmit DL signals, the BS may perform operations according to some embodiments of the present disclosure. The BS may include: at least one transceiver; at least one processor; and at least one computer memory operably connected to the at least one processor and storing instructions that, when executed, cause the at least one processor to perform the operations according to some embodiments of the present disclosure. A processing device for the BS may include: at least one processor; and at least one computer memory operably connected to the at least one processor and storing instructions that, when executed, cause the at least one processor to perform the operations according to some embodiments of the present disclosure. A computer-readable (non-volatile) storage medium may store at least one program including instructions that, when executed by at least one processor, cause the at least one processor

30

to perform the operations according to some embodiments of the present disclosure. A computer program or computer program product may be recorded on at least one computer-readable (non-volatile) storage medium and may include instructions that, when executed, cause at least one processor to perform the operations according to some embodiments of the present disclosure.

For the BS, the processing device, the computer-readable (non-volatile) storage medium, and/or the computer program product, the operations may include: transmitting an SSB on a cell, wherein the SSB includes a PSS, an SSS, and a PBCH, and wherein the SSB includes information regarding whether an SIB1 is on-demand SI; receiving an SIB1 request based on the SIB 1 being the on-demand SI; transmitting a PDCCH related to the SIB1 based on the SIB1 request; and transmitting a PDSCH carrying the SIB1.

In some implementations of the present disclosure, the information regarding whether the SIB1 is the on-demand SI may be transmitted based on at least one of a specific bit in the PBCH, a synchronization signal sequence, or a DMRS sequence for the PBCH.

In some implementations of the present disclosure, the information regarding whether the SIB1 is the on-demand SI may be transmitted based on an SIB1-related PDCCH configuration field in an MIB carried by the PBCH.

In some implementations of the present disclosure, the information regarding whether the SIB1 is the on-demand SI may be transmitted based on an SSB subcarrier offset field in an MIB carried by the PBCH.

In some implementations of the present disclosure, receiving the SIB1 request may include receiving a RACH related to the SSB, and SIB1 may be related to a predetermined SSB index corresponding to the RACH.

In some implementations of the present disclosure, receiving the SIB1 request may include receiving a RACH related to the SSB, and the SIB1 may be related to all transmitted SSB indices.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

**Industrial Applicability**

The implementations of the present disclosure may be used in a BS, a UE, or other equipment in a wireless communication system.

**Claims**

1. A method of receiving a downlink signal by a user equipment (UE) in a wireless communication system, the method comprising:

   detecting a synchronization signal block (SSB) on a cell, wherein the SSB includes a primary synchronization signal (PSS), a secondary synchronization signal (SSS), and a physical broadcast channel (PBCH);
   obtaining information regarding whether a system information block 1 (SIB1) is on-demand system information (SI) from the SSB;
   transmitting an SIB1 request based on the SIB1 being the on-demand SI;
   monitoring a physical downlink control channel (PDCCH) related to the SIB1 based on the SIB1 request; and
   receiving a physical downlink shared channel (PDSCH) carrying the SIB1 based on detection of the PDCCH.

2. The method of claim 1, wherein the information regarding whether the SIB1 is the on-demand SI is obtained based on at least one of a specific bit in the PBCH, a synchronization signal sequence, or a demodulation reference signal (DMRS) sequence for the PBCH.

3. The method of claim 1, wherein the information regarding whether the SIB1 is the on-demand SI is obtained based on an SIB1-related PDCCH configuration field in a master information block (MIB) carried by the PBCH.

4. The method of claim 3, comprising:

   based on the SIB1-related PDCCH configuration field having a predetermined value, determining whether the SIB1 is the on-demand SI; and

based on a determination that the SIB1 is the on-demand SI, transmitting the SIB1 request.

5. The method of claim 1, wherein the information regarding whether the SIB1 is the on-demand SI is obtained based on an SSB subcarrier offset field in a master information block (MIB) carried by the PBCH.

6. The method of claim 5, comprising:

based on the SSB subcarrier offset field in the MIB having a predetermined value, determining whether the SIB1 is the on-demand SI; and
based on a determination that the SIB1 is the on-demand SI, transmitting the SIB1 request.

7. The method of claim 1, wherein transmitting the SIB1 request comprises transmitting a random access channel (RACH) related to the SSB, and
wherein the SIB1 is related to a predetermined SSB index corresponding to the RACH.

8. The method of claim 1, wherein transmitting the SIB1 request comprises transmitting a random access channel (RACH) related to the SSB, and
wherein the SIB1 is related to all transmitted SSB indices.

9. A user equipment (UE) configured to receive a downlink signal in a wireless communication system, the UE comprising:

at least one transceiver;
at least one processor; and
at least one computer memory operably connected to the at least one processor and storing instructions that, when executed, cause the at least one processor to perform operations comprising:

detecting a synchronization signal block (SSB) on a cell, wherein the SSB includes a primary synchronization signal (PSS), a secondary synchronization signal (SSS), and a physical broadcast channel (PBCH);
obtaining information regarding whether a system information block 1 (SIB1) is on-demand system information (SI) from the SSB;
transmitting an SIB1 request based on the SIB1 being the on-demand SI;
monitoring a physical downlink control channel (PDCCH) related to the SIB1 based on the SIB1 request; and
receiving a physical downlink shared channel (PDSCH) carrying the SIB1 based on detection of the PDCCH.

10. A processing device in a wireless communication system, the processing device comprising:

at least one processor; and
at least one computer memory operably connected to the at least one processor and storing instructions that, when executed, cause the at least one processor to perform operations comprising:

detecting a synchronization signal block (SSB) on a cell, wherein the SSB includes a primary synchronization signal (PSS), a secondary synchronization signal (SSS), and a physical broadcast channel (PBCH);
obtaining information regarding whether a system information block 1 (SIB1) is on-demand system information (SI) from the SSB;
transmitting an SIB1 request based on the SIB1 being the on-demand SI;
monitoring a physical downlink control channel (PDCCH) related to the SIB1 based on the SIB1 request; and
receiving a physical downlink shared channel (PDSCH) carrying the SIB1 based on detection of the PDCCH.

11. A computer-readable storage medium configured to store at least one program comprising instructions that, when executed by at least one processor, cause the at least one processor to perform operations for a user equipment (UE), wherein the operations comprise:

detecting a synchronization signal block (SSB) on a cell, wherein the SSB includes a primary synchronization signal (PSS), a secondary synchronization signal (SSS), and a physical broadcast channel (PBCH);
obtaining information regarding whether a system information block 1 (SIB1) is on-demand system information (SI) from the SSB;
transmitting an SIB1 request based on the SIB1 being the on-demand SI;

monitoring a physical downlink control channel (PDCCH) related to the SIB1 based on the SIB1 request; and
receiving a physical downlink shared channel (PDSCH) carrying the SIB1 based on detection of the PDCCH.

12. A computer program stored on a computer-readable storage medium, the computer program comprising at least one program code comprising instructions that, when executed, cause at least one processor to perform operations comprising:

detecting a synchronization signal block (SSB) on a cell, wherein the SSB includes a primary synchronization signal (PSS), a secondary synchronization signal (SSS), and a physical broadcast channel (PBCH);
obtaining information regarding whether a system information block 1 (SIB1) is on-demand system information (SI) from the SSB;
transmitting an SIB1 request based on the SIB1 being the on-demand SI;
monitoring a physical downlink control channel (PDCCH) related to the SIB1 based on the SIB1 request; and
receiving a physical downlink shared channel (PDSCH) carrying the SIB1 based on detection of the PDCCH.

13. A method of transmitting, by a base station (BS), a downlink signal to a user equipment (UE) in a wireless communication system, the method comprising:

transmitting a synchronization signal block (SSB) on a cell, wherein the SSB includes a primary synchronization signal (PSS), a secondary synchronization signal (SSS), and a physical broadcast channel (PBCH), and wherein the SSB includes information regarding whether a system information block 1 (SIB1) is on-demand system information (SI);
receiving an SIB1 request based on the SIB1 being the on-demand SI;
transmitting a physical downlink control channel (PDCCH) related to the SIB1 based on the SIB1 request; and
transmitting a physical downlink shared channel (PDSCH) carrying the SIB1.

14. A base station (BS) configured to transmit a downlink signal to a user equipment (UE) in a wireless communication system, the BS comprising:

at least one transceiver;
at least one processor; and
at least one computer memory operably connected to the at least one processor and storing instructions that, when executed, cause the at least one processor to perform operations comprising:

transmitting a synchronization signal block (SSB) on a cell, wherein the SSB includes a primary synchronization signal (PSS), a secondary synchronization signal (SSS), and a physical broadcast channel (PBCH), and wherein the SSB includes information regarding whether a system information block 1 (SIB1) is on-demand system information (SI);
receiving an SIB1 request based on the SIB1 being the on-demand SI;
transmitting a physical downlink control channel (PDCCH) related to the SIB1 based on the SIB1 request; and
transmitting a physical downlink shared channel (PDSCH) carrying the SIB1.

# FIG. 1

1

# FIG. 2

# FIG. 3

# FIG. 4

| ... | 1 Frame (10 ms) | ... |

| ... | Half-Frame (5ms) | Half-Frame(5ms) | ... |

| ... | Subframe 0 (1ms) | ... | Subframe 4 (1ms) | Subframe 5 (1ms) | ... | Subframe 9 (1ms) | ... |

Subframe ($T_{sf}$ = 1ms)

| 15kHz | Slot (14 symbols) |

1ms

| 30kHz | Slot 0 (14 symbols) | Slot 1 |

500us

| 60kHz | Slot 0 (14 Slot) | Slot 1 | Slot 2 | Slot 3 |

250us

| 120kHz | Slot 0 (14 symbols) | Slot 1 | Slot 2 | Slot 3 | Slot 4 | Slot 5 | Slot 6 | Slot 7 |

125us

# FIG. 5

Resource grid

A carrier
(up to 3300 subcarriers, i. e., 275 RBs)

A BWP

1 RB = 12 subcarriers

1 RE

1 subcarrier

1 symbol

# FIG. 6

Initial Cell Search — PSS/SSS & [DL RS] & PBCH — S11

System Information Reception — PDCCH/PDSCH (BCCH) — S12

Random Access Procedure — PRACH (S13), PDCCH/PDSCH (S14), PUSCH (S15), PDCCH/PDSCH (S16)

General DL/UL Tx/Rx — PDCCH/PDSCH (S17), PUSCH/PUCCH (S18)

- DL/UL HARQ-ACK
- UE CSI report via PUSCH and/or PUCCH

EP 4 572 421 A1

# FIG. 7

# FIG. 8

UE                                                                    BS

Msg1 on PRACH: preamble

Msg2 on PDSCH: random access response
(resource allocation)

Msg3 on PUSCH: scheduled transmission
(RRC Connection Request)

Msg4 on PDSCH: contention resolution
(RRC Connection Setup)

(a)

UE                                                                    BS

MsgA: preamble + payload

MsgB: random access response
(resource allocation)

(b)

# FIG. 9

(a)

(b)

(c)

# FIG. 10

# FIG. 11

PDCCH
reception

Short
DRX cycle

Short
DRX cycle

Long DRX cycle

Long DRX cycle

time

☐ Time while drx-onDurationTimer is running

⌐¬ Time while drx-InactivityTimer is running
⌊_⌋

# FIG. 12

SIB1 PDCCH

SIB1 PDSCH

SIB1 PDCCH

SIB1 PDSCH

SIB1 PDCCH

SIB1 PDSCH

time

$P_{SIB1}$

# FIG. 13

| | |
|---|---|
| Detect SSB including PSS, SSS, and PBCH on cell. | S1301 |
| Obtain information on whether SIB1 is on-demand SI from SSB. | S1302 |
| Transmit SIB1 request based on SIB1 being on-demand SI. | S1303 |
| Monitor PDCCH related to SIB1 based on SIB1 request and receive PDSCH carrying SIB1 based on detection of PDCCH. | S1304 |

# FIG. 14

| | |
|---|---|
| Transmit SSB including information on whether SIB1 is on-demand SI and PSS, SSS, and PBCH on cell. | S1401 |
| Receive SIB1 request based on that SIB1 is on-demand SI. | S1402 |
| Transmit PDCCH related to SIB1 based on SIB1 request. | S1403 |
| Transmit PDSCH carrying SIB1. | S1404 |

# EP 4 572 421 A1

## INTERNATIONAL SEARCH REPORT

<table>
<tr><td colspan="2">International application No.</td></tr>
<tr><td colspan="2"><b>PCT/KR2023/011515</b></td></tr>
</table>

### A. CLASSIFICATION OF SUBJECT MATTER

**H04W 52/02**(2009.01)i; **H04W 48/14**(2009.01)i

According to International Patent Classification (IPC) or to both national classification and IPC

### B. FIELDS SEARCHED

Minimum documentation searched (classification system followed by classification symbols)

H04W 52/02(2009.01); H04W 48/10(2009.01); H04W 48/14(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동기 신호 블록(synchronization signal block, SSB), 시스템 정보 블록 1(system information block 1, SIB1), 온-디맨드(on-demand), 물리 브로드캐스트 채널(physical broadcast channel, PBCH), 마스터 정보 블록(master information block, MIB)

### C. DOCUMENTS CONSIDERED TO BE RELEVANT

| Category* | Citation of document, with indication, where appropriate, of the relevant passages | Relevant to claim No. |
|---|---|---|
| Y<br>A | QUALCOMM INCORPORATED. Network energy saving techniques. R1-2205046, 3GPP TSG RAN WG1 #109-e, e-Meeting. 29 April 2022.<br>See sections 2 and 7.2. | 1,7-14<br>2-6 |
| Y | KR 10-2398947 B1 (SHARP KABUSHIKI KAISHA et al.) 17 May 2022 (2022-05-17)<br>See paragraph [0054]; and claim 1. | 1,7-14 |
| A | MODERATOR (INTEL CORPORATION). Summary #1 for email discussion on energy saving techniques of NW energy saving SI. R1-2205141, 3GPP TSG RAN WG1 Meeting #109-e, e-Meeting. 20 May 2022.<br>See section 2.6. | 1-14 |
| A | HUAWEI et al. Discussion on network energy saving techniques. R1-2203173, 3GPP TSG RAN WG1 Meeting #109-e, e-Meeting. 29 April 2022.<br>See section 2.1. | 1-14 |

✓ Further documents are listed in the continuation of Box C.    ✓ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **10 November 2023** | **13 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/011515** |

### C.   DOCUMENTS CONSIDERED TO BE RELEVANT

| Category* | Citation of document, with indication, where appropriate, of the relevant passages | Relevant to claim No. |
| --- | --- | --- |
| A | KR 10-2021-0030338 A (SAMSUNG ELECTRONICS CO., LTD.) 17 March 2021 (2021-03-17)<br>See paragraphs [0114]-[0138]. | 1-14 |

Form PCT/ISA/210 (second sheet) (July 2022)

## INTERNATIONAL SEARCH REPORT
### Information on patent family members

International application No.

**PCT/KR2023/011515**

| Patent document cited in search report | | | Publication date (day/month/year) | Patent family member(s) | | | Publication date (day/month/year) |
|---|---|---|---|---|---|---|---|
| KR | 10-2398947 | B1 | 17 May 2022 | AU | 2017-302538 | A1 | 01 February 2018 |
| | | | | AU | 2017-302538 | B2 | 03 March 2022 |
| | | | | CN | 109863493 | A | 07 June 2019 |
| | | | | CN | 109863493 | B | 23 May 2023 |
| | | | | CN | 207098907 | U | 13 March 2018 |
| | | | | EP | 3491567 | A1 | 05 June 2019 |
| | | | | EP | 3491567 | B1 | 01 September 2021 |
| | | | | MX | 2019001051 | A | 23 September 2019 |
| | | | | RU | 2019104613 | A | 27 August 2020 |
| | | | | RU | 2019104613 | A3 | 27 August 2020 |
| | | | | RU | 2737202 | C2 | 25 November 2020 |
| | | | | US | 10596596 | B2 | 24 March 2020 |
| | | | | US | 10687270 | B2 | 16 June 2020 |
| | | | | US | 11284336 | B2 | 22 March 2022 |
| | | | | US | 2018-0035361 | A1 | 01 February 2018 |
| | | | | US | 2018-0297075 | A1 | 18 October 2018 |
| | | | | US | 2020-0305066 | A1 | 24 September 2020 |
| | | | | WO | 2018-022570 | A1 | 01 February 2018 |
| KR | 10-2021-0030338 | A | 17 March 2021 | CN | 112586079 | A | 30 March 2021 |
| | | | | EP | 3815457 | A1 | 05 May 2021 |
| | | | | US | 11153912 | B2 | 19 October 2021 |
| | | | | US | 11696339 | B2 | 04 July 2023 |
| | | | | US | 2020-0053796 | A1 | 13 February 2020 |
| | | | | US | 2022-0039172 | A1 | 03 February 2022 |
| | | | | WO | 2020-032599 | A1 | 13 February 2020 |

Form PCT/ISA/210 (patent family annex) (July 2022)